(19) Europäisches Patentamt
European Patent Office
Office européen des brevets

(11) **EP 4 230 699 A2**

(12) **EUROPÄISCHE PATENTANMELDUNG**

(43) Veröffentlichungstag:
**23.08.2023 Patentblatt 2023/34**

(21) Anmeldenummer: **23166701.5**

(22) Anmeldetag: **12.07.2021**

(51) Internationale Patentklassifikation (IPC):
**C08L 97/00** *(2006.01)*

(52) Gemeinsame Patentklassifikation (CPC):
**C08H 6/00; C07G 1/00; C08L 97/005**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2020 DE 102020208684**
**23.12.2020 DE 102020134900**

(62) Dokumentnummer(n) der früheren Anmeldung(en) nach Art. 76 EPÜ:
**21748810.5 / 4 028 453**

(71) Anmelder: **SunCoal Industries GmbH**
**14974 Ludwigsfelde (DE)**

(72) Erfinder:
• **STÜCKER, Alexander**
**25596 Wacken (DE)**

• **PODSCHUN, Jacob**
**12555 Berlin (DE)**
• **WITTMANN, Tobias**
**10965 Berlin (DE)**
• **KÖHL, Lenz Aron Mathis**
**10551 Berlin (DE)**

(74) Vertreter: **Steffan & Kiehne Patentanwälte PartG mbB**
**Burgplatz 21-22**
**40213 Düsseldorf (DE)**

Bemerkungen:
•Diese Anmeldung ist am 05.04.2023 als Teilanmeldung zu der unter INID-Code 62 erwähnten Anmeldung eingereicht worden.
•Die Patentansprüche wurden nach dem Anmeldetag eingereicht (R. 68(4) EPÜ).

(54) **VERFAHREN ZUR HERSTELLUNG EINES STABILISIERTEN LIGNINS MIT HOHER SPEZIFISCHER OBERFLÄCHE**

(57)    Die vorliegende Erfindung betrifft ein Verfahren zur Herstellung eines Lignins in Partikelform aus einer Flüssigkeit, die ligninhaltigen Rohstoff enthält, wobei das Verfahren wenigstens eine Umsetzung mit einem Vernetzer (Schritt a)), eine Fällung des Lignins unter Bildung von Ligninpartikeln in der Flüssigkeit (Schritt b)) und ein Abtrennen der Flüssigkeit von den in Schritt b) gebildeten Ligninpartikeln (Schritt c)) umfasst, und wobei innerhalb von Schritt b) die Flüssigkeit nach erfolgter Fällung bei einer Temperatur im Bereich von 60 bis 200 °C für eine Dauer von 1 Minute bis 6 Stunden wärmebehandelt wird, und/oder in einem zusätzlichen Schritt d) nach Schritt c) die von der Flüssigkeit abgetrennten Ligninpartikel bei einer Temperatur im Bereich von 60 bis 600°C wärmebehandelt werden, sowie Ligninpartikel, die gemäß dem Verfahren erhältlich sind, Ligninpartikel als solche, eine Verwendung der Ligninpartikel als Füllstoff, sowie eine Kautschukzusammensetzung umfassend u.a. eine Füllstoffkomponente, wobei diese die Ligninpartikel als Füllstoff enthält.

Fig. 1

EP 4 230 699 A2

**Beschreibung**

Die vorliegende Erfindung betrifft ein Verfahren zur Herstellung eines Lignins in Partikelform aus einer Flüssigkeit, die ligninhaltigen Rohstoff enthält, wobei das Verfahren wenigstens eine Umsetzung mit einem Vernetzer (Schritt a)), eine Fällung des Lignins unter Bildung von Ligninpartikeln in der Flüssigkeit (Schritt b)) und ein Abtrennen der Flüssigkeit von den in Schritt b) gebildeten Ligninpartikeln (Schritt c)) umfasst, und wobei innerhalb von Schritt b) die Flüssigkeit nach erfolgter Fällung bei einer Temperatur im Bereich von 60 bis 200 °C für eine Dauer von 1 Minute bis 6 Stunden wärmebehandelt wird, und/oder in einem zusätzlichen Schritt d) nach Schritt c) die von der Flüssigkeit abgetrennten Ligninpartikel bei einer Temperatur im Bereich von 60 bis 600°C wärmebehandelt werden, sowie Ligninpartikel, die gemäß dem Verfahren erhältlich sind, Ligninpartikel als solche, eine Verwendung der Ligninpartikel als Füllstoff, sowie eine Kautschukzusammensetzung umfassend u.a. eine Füllstoffkomponente, wobei diese die Ligninpartikel als Füllstoff enthält.

**Stand der Technik / Hintergrund der Erfindung**

Lignin aus Laubholz, Nadelholz und Einjahrespflanzen zeigt nach der Extraktion / Gewinnung in Form von zum Beispiel Kraftlignin, Lignosulfonat oder Hydrolyselignin eine hohe Löslichkeit in vielen polaren und alkalischen Medien. Lignine zeigen u.a. bei Temperaturen von zumeist 80°C - 150°C einen Glasübergang. Durch die Erweichung wird die mikroskopische Struktur von Ligninpartikeln bereits bei niedrigen Temperaturen verändert. Lignin beinhaltende Materialien sind deshalb in der Regel nicht beständig bei erhöhter Temperatur bzw. verändern ihre Eigenschaften. Weiterhin ist die Löslichkeit von Lignin in polaren Lösungsmitteln wie Dioxan und Aceton mit z.B. 10% Wasser oder im alkalischen Medium in der Regel > 95% (Sameni et al., BioResources, 2017, 12, 1548-1565; Podschun et al., European Polymer Journal, 2015, 67, 1-11). In der US 2013/0116383 A1 wird eine Herstellung von vernetztem Lignin offenbart und anvisiert, die Löslichkeit eine solchen Lignins in polaren Lösungsmitteln wie wässrigen alkalischen Lösungen zu erhöhen. Aufgrund dieser und anderer Eigenschaften ist Lignin nur eingeschränkt in Materialanwendungen nutzbar (DE102013002574A1). Mit Lignin wird im Folgenden insbesondere die Summe aus Klasonlignin und säurelöslichem Lignin gemeint. Die Trockenmasse kann weiterhin andere organische und anorganische Bestandteile enthalten.

Um diese Nachteile zu überwinden wurde vorgeschlagen, ein stabilisiertes Lignin durch hydrothermale Karbonisierung oder hydrothermale Behandlung herzustellen, was durch eine Erweichungstemperatur (Glasübergangstemperatur) von mehr als 200°C gekennzeichnet ist (WO2015018944A1). Durch Einstellung des pH-Wertes in solchen Verfahren kann ein stabilisiertes Lignin mit definierter Korngrößenverteilung gewonnen werden (WO2015018944A1).

Verbesserte Verfahren nutzen Lignin als Rohstoff für die Erzeugung von partikelförmigen Kohlenstoffmaterialien, die beispielsweise als funktionale Füllstoffe in Elastomeren Anwendung finden können (WO2017085278A1). Ein wesentlicher Qualitätsparameter für funktionale Füllstoffe ist die äußere Oberfläche des partikelförmigen Kohlenstoffmaterials, welche durch Messung der STSA ermittelt wird. Solche Verfahren bedienen sich einer hydrothermalen Karbonisierung einer Lignin beinhaltenden Flüssigkeit in der Regel bei Temperaturen zwischen 150°C und 250°C. Aufgrund der hohen Reaktivität des Lignins bei solchen Temperaturen, ist für die Erreichung hoher spezifischer Oberflächen eine Feinabstimmung zwischen pH-Wert, Ionenstärke und Ligningehalt der Lignin beinhaltenden Flüssigkeit sowie der Temperatur und der Zeit der hydrothermalen Karbonisierung erforderlich. Dies wird durch die Einstellung des pH-Wertes in den alkalischen Bereich in der Regel auf Werte oberhalb von 7 erreicht.

Für solche partikelförmigen Kohlenstoffmaterialien eröffnen sich im Vergleich zu den jeweiligen Ausgangsligninen verschiedene Anwendungen in Materialien. So können diese z.B. aufgrund der geringen Löslichkeit im alkalischen von weniger als 40% und einer spezifischen Oberfläche von mehr als 5 m$^2$/g und weniger als 200 m$^2$/g in Elastomeren als verstärkende Füllstoffe genutzt werden und Industrieruß ganz oder teilweise substituieren.

Nachteil dieser bekannten Verfahren ist die geringe Ausbeute, die in der Regel zwischen 40% und 60% liegt. Weiterer Nachteil dieser Verfahren ist der hohe Aufwand, die Eigenschaften der Lignin beinhaltenden Flüssigkeit (pH-Wert, Ionenstärke, LigninGehalt) auf die Prozessparameter der hydrothermalen Karbonisierung (Temperatur und Verweilzeit) anzupassen, um höhere spezifische Oberflächen zu erreichen.

Während das Erreichen von Oberflächen im Bereich 5 m$^2$/g bis zu 40 m$^2$/g vergleichsweise einfach ist, ist das Erreichen von spezifischen Oberflächen über 40 m$^2$/g aufgrund der erforderlichen Sensitivität der oben genannten Abstimmung eher im Labor als im industriellen Maßstab möglich. Anzunehmen ist, dass eine solche Anpassung mit dem Ziel, die spezifische Oberfläche zu erhöhen, zu einer Reduktion der Ausbeute führt.

Nachteilig an den beispielsweise aus WO2015018944A1 und WO2017085278A1 bekannten Verfahren ist neben den erforderlichen vergleichsweise hohen Temperaturen per se, die zur Durchführung der hydrothermalen Behandlung erforderlich sind - was allein aus ökonomischen Gründen nicht vorteilhaft ist -, insbesondere der vergleichsweis hohe Anteil an in polaren oder alkalischen Medien löslichen Verbindungen im nach der hydrothermalen Behandlung erhältlichen Produkt, die sich aufgrund von Depolymerisations-Reaktionen, die bei den gewählten vergleichsweise hohen Temperaturen ablaufen, bilden. Insbesondere wenn die erhaltenen hydrothermal behandelten Lignine als funktionale Füllstoffe in Elastomeren eingesetzt werden, ist eine möglichst hohe Unlöslichkeit in den vorstehend genannten Medien jedoch erstrebenswert bzw. erforderlich. Zudem ist an den beispielsweise aus WO2015018944A1 und WO2017085278A1 bekannten Verfahren nachteilig, dass die daraus erhältlichen hydrothermal behandelten Lignine einen relativ hohen Gehalt an aus ihnen ausgasbaren organischen Verbindungen (Emissionen) aufweisen, so dass diese nach ihrer Herstellung noch in einem separaten Verfahrensschritt auf Temperaturen von 150 °C bis zu 250 °C erhitzt werden müssen, um Vorgaben hinsichtlich Emissionen zu erfüllen und/oder Geruchsneutralität zu gewährleisten.

Ein weiteres bekanntes Verfahren zur Erhöhung der Ausbeute an Feststoff und die Steigerung der Ligninkonversion für die Herstellung von Brennstoffen aus einer Suspension von getrockneter Schwarzlauge und Wasser durch eine hydrothermale Karbonisierung bei Temperaturen zwischen 220 °C und 280 °C ist die Zugabe von Formaldehyd [Bioressource Technologie 2012, 110 715-718, Kang et al.]. Kang et al. schlägt die Zugabe von 37g Formaldehyd bezogen auf 100g trockenes Lignin bei einer Feststoffkonzentration von 20% vor (100 ml einer 2,8%igen Formaldehydlösung bezogen auf 25 g Trockenmasse gewonnen durch Trocknung von Schwarzlauge mit 30% Ligninanteil bezogen auf die Trockenmasse). Dadurch wird erreicht, den Umsatz von in der Schwarzlauge enthaltenem Lignin in Feststoff von 60% - 80% auf Werte zwischen 90% und 100% zu erhöhen, wobei die höchsten Werte bei Temperaturen zwischen 220°C und 250°C erreicht werden. Dieser Stand der Technik führt die Steigerung der Ausbeute auf die Polymerisation zwischen Formaldehyd, dem Feststoff der Schwarzlauge sowie den aus diesem Feststoff gebildeten Karbonisierungsprodukten zurück (Seite 716, letzter Paragraph).

Nachteile dieses Standes der Technik:

- die hohe spezifische Dosierung von Formaldehyd von 37 g auf 100g Lignin Trockenmasse,

- die hohen Aschegehalte der eingesetzten Trockenmasse sowie der daraus erzeugten Produkte,

- die hohen Prozesstemperaturen und die damit einhergehenden hohen Prozessdrücke,

- die Polymerisation zwischen Formaldehyd, dem Feststoff der Schwarzlauge sowie den aus diesem Feststoff gebildeten Karbonisierungsprodukten

- die hohe Löslichkeit der erhaltenen Produkte,

- der hohe Anteil an geruchsintensiven bzw. flüchtigen Bestandteilen, und

- die damit einhergehende Einschränkung der Nutzung des Produktes auf Brennstoffanwendungen (vgl. Kang et al).

Es besteht daher ein Bedarf an neuen Verfahren zur Herstellung von stabilisierten Ligninen in Partikelform und mittels dieser Verfahren erhältlicher Produkte sowie unter Nutzung dieser Produkte hergestellter Materialien, die die vorstehend genannten Nachteile der bekannten Verfahren und Produkte nicht aufweisen.

**Kurze Beschreibung der Erfindung, Aufgabe und Lösung**

Ziel der vorliegenden Erfindung ist es, ein Verfahren zu finden, welches zu einem stabilisierten, für Materialanwendungen geeigneten Lignin bei hoher Ausbeute führt.

Aufgabe der Erfindung ist insbesondere die Bereitstellung eines Verfahrens, welches

- die Löslichkeit des Lignins in alkalischen und/oder polaren Medien reduziert,

- die Glasübergangstemperatur des Lignins erhöht oder eliminiert,

- zu einem stabilisierten Lignin mit vorteilhaften Partikeleigenschaften führt,

- zu stabilisierten Produkten führt, die wenn überhaupt einen nur geringen Gehalt an aus ihnen ausgasbaren organischen Verbindungen (Emissionen) aufweisen,

- eine hohe Ausbeute hat und/oder

- nur relativ niedrige Temperaturen benötigt, insbesondere bei der Behandlung von flüssigen Medien, so dass eine vereinfachte und ökonomisch vorteilhafte Verfahrensführung gegenüber den Verfahren nach dem Stand der Technik ermöglicht wird.

Diese Aufgabe wird gelöst durch die in den Patentansprüchen beanspruchten Gegenstände sowie die in der nachfolgenden Beschreibung beschriebenen bevorzugten Ausführungsformen dieser Gegenstände. Die Aufgabe konnte insbesondere überraschenderweise durch ein Verfahren gelöst werden, bei dem unter anderem ein Fällungsmittel eingesetzt wird, um gelöstes Lignin unter Bildung von Ligninpartikeln aus der Lösung zu fällen.

Die Erfindung betrifft in einem ersten Gegenstand daher entsprechend ein Verfahren zur Herstellung eines Lignins in Partikelform aus einer Flüssigkeit, die ligninhaltigen Rohstoff enthält, wobei Lignin zumindest zum Teil in der Flüssigkeit gelöst ist, wobei das Verfahren folgende Schritte umfasst:

a) Umsetzen von in der Flüssigkeit gelöstem Lignin mit mindestens einem Vernetzer in der Flüssigkeit bei einer Temperatur im Bereich von 50 bis 180°C, um gelöstes modifiziertes Lignin in der Flüssigkeit zu erhalten,

b) Fällen des in Schritt a) erhaltenen gelösten modifizierten Lignins durch Mischen der Flüssigkeit mit einem Fällungsmittel bei einer Temperatur im Bereich von 0 bis unter 150°C unter Bildung von Ligninpartikeln in der Flüssigkeit, und

c) Abtrennen der Flüssigkeit von den in Schritt b) gebildeten Ligninpartikeln,
wobei

in Schritt b) die mit dem Fällungsmittel gemischte Flüssigkeit nach der Fällung bei einer Temperatur im Bereich von 60 bis 200 °C, vorzugsweise von 80 bis 150 °C, besonders bevorzugt von 80 bis unter 150°C, für eine Dauer von 1 Minute bis 6 Stunden wärmebehandelt wird, und/oder

in einem zusätzlichen Schritt d) nach Schritt c) die von der Flüssigkeit abgetrennten Ligninpartikel bei einer Temperatur im Bereich von 60 bis 600°C wärmebehandelt werden
oder

ein Verfahren zur Herstellung eines Lignins in Partikelform aus einer Flüssigkeit, die ligninhaltigen Rohstoff enthält, wobei Lignin zumindest zum Teil in der Flüssigkeit gelöst ist, wobei das Verfahren folgende Schritte umfasst:

a) Umsetzen von in der Flüssigkeit gelöstem Lignin mit mindestens einem Vernetzer in der Flüssigkeit bei einer Temperatur im Bereich von 50 bis 180°C, um gelöstes modifiziertes Lignin in der Flüssigkeit zu erhalten,

b) Fällen des in Schritt a) erhaltenen gelösten modifizierten Lignins durch Mischen der Flüssigkeit mit einem Fällungsmittel bei einer Temperatur im Bereich von 0 bis unter 150°C unter Bildung von Ligninpartikeln in der Flüssigkeit, und

c) Abtrennen der Flüssigkeit von den in Schritt b) gebildeten Ligninpartikeln,

wobei

in Schritt b) die mit dem Fällungsmittel gemischte Flüssigkeit bei einer Temperatur im Bereich von 80 bis unter 150°C wärmebehandelt wird, und/oder

in einem zusätzlichen Schritt d) nach Schritt c) die von der Flüssigkeit abgetrennten Ligninpartikel bei einer Temperatur im Bereich von 60 bis 600°C wärmebehandelt werden.

Die Erfindung betrifft in einem weiteren Gegenstand zudem Ligninpartikel, die erhältlich nach dem erfindungsgemäßen Verfahren sind, wobei die Ligninpartikel

einen d50-Wert der Korngrößenverteilung, bezogen auf das Volumenmittel, von weniger als 500 $\mu$m, bevorzugt weniger als 50 $\mu$m, noch bevorzugter von weniger als 20 $\mu$m aufweisen, und/oder

eine STSA-Oberfläche im Bereich von 2 m$^2$/g bis 180 m$^2$/g, bevorzugt 10 m$^2$/g bis 180 m$^2$/g, bevorzugt von 20 m$^2$/g bis 180 m$^2$/g, weiter bevorzugt von 35 m$^2$/g bis 150 oder 180 m$^2$/g, insbesondere bevorzugt von 40 m$^2$/g bis 120 oder 180 m$^2$/g aufweisen.

Die Erfindung betrifft in einem weiteren Gegenstand zudem Ligninpartikel, wobei die Ligninpartikel

einen d50-Wert der Korngrößenverteilung, bezogen auf das Volumenmittel, von weniger als 500 $\mu$m, bevorzugt weniger als 50 $\mu$m, noch bevorzugter von weniger als 20 $\mu$m, aufweisen, und/oder

eine STSA-Oberfläche im Bereich von 2 m²/g bis 180 m²/g, bevorzugt 10 m²/g bis 180 m²/g, bevorzugt von 20 m²/g bis 180 m²/g, weiter bevorzugt von 35 m²/g bis 150 oder 180 m²/g, insbesondere bevorzugt von 40 m²/g bis 120 oder 180 m²/g aufweisen,

wobei die Partikel einen Anteil an in einem alkalischen Medium löslichen Verbindungen von weniger als 30%, bevorzugt von weniger als 25%, besonders bevorzugt von weniger als 20%, darüber hinaus bevorzugt von weniger als 15%, darüber hinaus besonders bevorzugt von weniger als 10%, ferner bevorzugt von weniger als 7,5%, insbesondere von weniger als 5% aufweisen, am meisten bevorzugt von weniger als 2,5% oder von weniger als 1%, jeweils bezogen auf das Gesamtgewicht der Partikel, wobei das alkalische Medium eine wässrige Lösung von NaOH (0,1 Mol/l oder 0,2 Mol/l) darstellt und der Anteil bestimmt wird gemäß der in der Beschreibung beschriebenen Methode und die Partikel einen Anteil an aus ihnen ausgasbaren organischen Verbindungen (Emissionen) aufweisen, bestimmt gemäß Thermodesorptionsanalyse nach VDA 278 (05/2016), der bei <200 $\mu$g/g Ligninpartikel, besonders bevorzugt bei <175 $\mu$g/g Ligninpartikel, ganz besonders bevorzugt bei <150 $\mu$g/g Ligninpartikel, noch bevorzugter bei <100 $\mu$g/g Ligninpartikel, noch bevorzugter bei <50 $\mu$g/g Ligninpartikel, insbesondere bei <25 $\mu$g/g Ligninpartikel, liegt.

Durch das erfindungsgemäße Verfahren können stabilisierte Ligninpartikel mit einer hohen spezifischen Oberfläche, z.B. stabilisiertes Lignin mit einer STSA Oberfläche von mindestens 2 m²/g, bevorzugt 10 m²/g, aus ligninhaltigen Rohstoffen bereitgestellt werden. Dabei sind für die Bildung dieser Partikel nur relativ niedrige Temperaturen in flüssigen Medien erforderlich. Dies ermöglicht eine vereinfachte und ökonomisch vorteilhafte Verfahrensführung.

Zudem zeichnen sich die erhältlichen und erfindungsgemäßen Produkte überraschenderweise dadurch aus, dass sie - wenn überhaupt - einen nur sehr geringen Anteil an in polaren oder insbesondere alkalischen Medien löslichen Verbindungen aufweisen, der vorzugsweise bei ≤30%, besonders bevorzugt bei ≤20%, ganz besonders bevorzugt bei ≤10%, ferner bevorzugt von weniger als 7,5%, insbesondere von weniger als 5% aufweisen, am meisten bevorzugt von weniger als 2,5% oder von weniger als 1%, jeweils bezogen auf ihr Gesamtgewicht, liegt, was insbesondere dann vorteilhaft ist, wenn die Produkte als funktionale Füllstoffe in Elastomeren eingesetzt werden. Es wurde in diesem Zusammenhang gefunden, dass insbesondere durch die gewählte Verfahrensführung das Ablaufen von unerwünschten Depolymerisations-Reaktionen verhindert oder zumindest weitestgehend verhindert werden kann, was ursächlich für den vergleichsweise geringen Anteil an in polaren oder alkalischen Medien löslichen Verbindungen ist. In diesem Zusammenhang wurde insbesondere gefunden, dass für die Alternative des erfindungsgemäßen Verfahrens, gemäß der in einem zusätzlichen Schritt d) nach erfolgtem Schritt c) die von der Flüssigkeit abgetrennten Ligninpartikel bei einer Temperatur im Bereich von 60 bis 600°C wärmebehandelt werden, der gewählte Temperaturbereich der Wärmebehandlung relevant für den vergleichsweise geringen Anteil an in polaren oder alkalischen Medien löslichen Verbindungen innerhalb des erfindungsgemäß hergestellten Produkts ist. So ist im experimentellen Teil dieses Dokuments gezeigt worden, dass eine Wärmebehandlung bei einer geringeren Temperatur wie 40 °C (Beispiel "PS2 Wasserabtrennung 5") wie sie beispielsweise auch in Beispiel 1 der US 2013/0116383 A1 als Trocknungstemperatur gewählt worden ist, zu einer wesentlich höheren und erfindungsgemäß unerwünschten Löslichkeit in polaren oder alkalischen Medien führt. Dies ist in Einklang mit der allgemeinen Lehre der US 2013/0116383 A1, die auf eine verbesserte Löslichkeit abzielt, jedoch konträr zu dem, was von der vorliegenden Erfindung anvisiert ist.

Ferner zeichnen sich die erfindungsgemäßen Produkte dadurch aus, dass sie - wenn überhaupt - einen nur geringen Gehalt an aus ihnen ausgasbaren organischen Verbindungen (Emissionen) aufweisen, bestimmt gemäß Thermodesorptionsanalyse nach VDA 278 (05/2016). Dadurch erfüllen sie insbesondere industrielle Vorgaben hinsichtlich Emissionen und/oder Geruchsneutralität kann gewährleistet werden, ohne dass ein weiterer separater Verfahrensschritt zur Absenkung des Gehalts an aus ihnen ausgasbaren organischen Verbindungen erforderlich ist. Vorzugsweise weisen die Ligninpartikel einen Anteil an aus ihnen ausgasbaren organischen Verbindungen (Emissionen) auf, bestimmt gemäß Thermodesorptionsanalyse nach VDA 278 (05/2016), der bei <200 $\mu$g/g Ligninpartikel, besonders bevorzugt bei <175 $\mu$g/g Ligninpartikel, ganz besonders bevorzugt bei <150 $\mu$g/g Ligninpartikel, darüber hinaus bevorzugt bei <100 $\mu$g/g Ligninpartikel, besonders bevorzugt bei <50 $\mu$g/g Ligninpartikel, in einigen Fällen bei <25 $\mu$g/g Ligninpartikel liegt.

Es wurde zudem insbesondere überraschend gefunden, dass durch die gewählte Behandlungsdauer der Wärmebehandlung in Schritt b) von 1 Minute bis 6 h die vorgenannte geringe erwünschte Löslichkeit in insbesondere alkalischen Medien ("Alkalilöslichkeit) erzielt und ermöglicht wird. Gleichermaßen wurde überraschend gefunden, dass durch die gewählte Behandlungsdauer der Wärmebehandlung in Schritt b) von 1 Minute bis 6 h die vorgenannten nur geringen erwünschten Emissionswerte erzielt und ermöglicht werden. Die Wärmebehandlung geht somit über eine reine Koagulation der Partikel hinaus. Es wurde insbesondere gefunden, dass diese vorteilhaften Effekte dann erzielt werden, wenn die Dauer der Wärmebehandlung nach der Fällung in Schritt b) mindestens 5 oder mindestens 10 Minuten, vorzugsweise mindestens 15 oder mindestens 20 Minuten, besonders bevorzugt mindestens 25 Minuten oder mindestens 30 Minuten beträgt oder die Dauer der Wärmebehandlung nach der Fällung in Schritt b) in einem Bereich von 5 Minuten bis 5 Stunden, vorzugsweise von 10 Minuten bis 4,5 Stunden, besonders bevorzugt von 15 Minuten bis 4 Stunden, ganz besonders bevorzugt von 20 Minuten bis 3,5 Stunden, insbesondere von 25 oder 30 Minuten bis 3 Stunden, liegt. Insbesondere können die gewünschten Alkalilöslichkeit und/oder die gewünschten Emissionswerte dann nicht erzielt werden, wenn die Behandlungsdauer der Wärmebehandlung in Schritt b) zu kurz ist. Es wurde zudem gefunden, dass bei einer zu langen Behandlungsdauer der Wärmebehandlung in Schritt b) die Partikelgröße der Ligninpartikel, ermittelt als d50-Wert der Korngrößenverteilung, bezogen auf das Volumenmittel, zu groß ist, was beispielsweise in Bezug auf den Einsatz der Partikel als Füllstoffe Nachteile haben kann, und die STSA-Oberfläche der Partikel bei einer zu langen Behandlungsdauer zu gering wird.

Ein weiterer Gegenstand der vorliegenden Erfindung ist eine Verwendung der Ligninpartikel als Füllstoff, insbesondere in Kautschukzusammensetzungen.

Ein weiterer Gegenstand der vorliegenden Erfindung ist eine Kautschukzusammensetzung umfassend wenigstens eine Kautschukkomponente und wenigstens eine Füllstoffkomponente, wobei die Füllstoffkomponente erfindungsgemäße Ligninpartikel als Füllstoff enthält, wobei die Kautschukzusammensetzung vorzugsweise vulkanisierbar ist.

## Detaillierte Beschreibung der Erfindung

Im Rahmen der vorliegenden Erfindung wird das mittels des erfindungsgemäßen Verfahrens hergestellte Lignin in Partikelform auch als stabilisiertes Lignin bezeichnet. Zur Stabilisierung der Ligninpartikel wird in Schritt b) die mit dem Fällungsmittel gemischte Flüssigkeit nach der Fällung bei einer Temperatur im Bereich von 60 bis 200 °C, vorzugsweise von 80 bis 150 °C, besonders bevorzugt von 80 bis unter 150°C wärmebehandelt, vorzugsweise für eine Dauer von 1 Minute bis 6 Stunden, und/oder es werden in einem zusätzlichen Schritt d) nach Schritt c) die von der Flüssigkeit abgetrennten Ligninpartikel bei einer Temperatur im Bereich von 60 bis 600°C wärmebehandelt.

## Bevorzugte ligninhaltige Rohstoffe

In dem erfindungsgemäßen Verfahren wird als Ausgangsmaterial eine Flüssigkeit eingesetzt, die ligninhaltigen Rohstoff enthält, wobei Lignin zumindest zum Teil in der Flüssigkeit gelöst ist.

Bevorzugte ligninhaltige Rohstoffe sind insbesondere:

- Schwarzlauge aus dem Kraftaufschluss von holzartiger Biomasse oder daraus hergestellte Feststoffe (z.B. Ligno-Boost Lignin, LignoForce Lignin),
- Feststoffe aus der enzymatischen Hydrolyse von holzartiger Biomasse,
- Schwarzlauge aus dem Aufschluss von holzartiger Biomasse mit Sulfiten (Lignosulfonaten) oder daraus hergestellte Feststoffe oder
- Flüssigkeiten aus dem Aufschluss von holzartiger Biomasse mit Lösungsmitteln wie beispielweise Ethanol oder organischen Säuren oder daraus hergestellte Feststoffe (z.B. Organosolv Lignin).

Die Feststoffe, die aus den genannten ligninhaltigen Flüssigkeiten wie Schwarzlauge hergestellt werden, sind naturgemäß ligninhaltige Feststoffe. Sie können z.B. erhalten werden, indem die flüssigen Bestandteile der ligninhaltigen Flüssigkeit abgetrennt werden, z.B. durch Verdampfen, wobei gegebenenfalls weitere Behandlungsschritte durchgeführt werden, z.B. eine Reinigung. Solche ligninhaltigen Feststoffe sind im Handel erhältlich.

Handelt es sich bei dem ligninhaltigen Rohstoff um eine Flüssigkeit, so kann dieser als solcher als Flüssigkeit, die den ligninhaltigen Rohstoff enthält, verwendet werden, wobei zumindest ein Teil des Lignins in der Flüssigkeit gelöst ist. Selbstverständlich können je nach Bedarf weitere Flüssigkeiten oder Zusatzstoffe aufgenommen werden.

Handelt es sich bei den ligninhaltigen Rohstoffen um Feststoffe, so wird dieser mit einer Flüssigkeit vermischt, so dass das darin enthaltene Lignin vor dem Schritt a) (der ersten Prozessstufe) in einer Lösungsstufe ganz oder teilweise in der Flüssigkeit gelöst ist, um eine für das erfindungsgemäße Verfahren geeignete Flüssigkeit, die den ligninhaltigen Rohstoff enthält, bereitzustellen, die in einer Flüssigkeit gelöstes Lignin beinhaltet.

Vorteilhaft wird in der Lösungsstufe der ligninhaltige Rohstoff mit einer Flüssigkeit vermischt und in dieser Flüssigkeit zumindest teilweise gelöst. Die Flüssigkeit kann mehre Stoffe umfassen und der Flüssigkeit können Additive zugegeben werden, welche die Löslichkeit des ligninhaltigen Rohstoffes erhöhen oder in sonstiger Weise zweckmäßig sind. Die Flüssigkeit kann Wasser und/oder organische Lösungsmittel enthalten.

In einer bevorzugten Ausführungsform erfolgt die Lösung des ligninhaltigen Rohstoffes in einer alkalischen Flüssigkeit. Eine bevorzugte Flüssigkeit umfasst Wasser, also eine wässrige alkalische Flüssigkeit. Bevorzugte Flüssigkeiten umfassen Natronlauge, Kalkmilch und/oder Kalilauge.

In einer alternativen bevorzugten Ausführungsform erfolgt die Lösung des ligninhaltigen Rohstoffes in einer sauren Flüssigkeit, z.B. einer wässrigen sauren Flüssigkeit. Eine bevorzugte Flüssigkeit umfasst Wasser und mindestens eine Carbonsäure beispielweise Ameisensäure, Zitronensäure und/oder Essigsäure. Die Flüssigkeit kann in einer bevorzugten Ausführungsform eine Carbonsäure, z.B. Ameisensäure und/oder Essigsäure, in hohen Mengen enthalten, z.B. mehr als 50 Gew.-% oder mehr als 80 Gew.-%, der Flüssigkeit, wobei es sich z.B. um technische Carbonsäure handeln kann, die nicht mehr als 10 Gew.-% Wasser enthält.

Die Flüssigkeit kann darüber hinaus auch Alkohole beispielweise Ethanol umfassen.

Es ist besonders bevorzugt, wenn die Flüssigkeit umfasst oder ausgewählt ist aus

- einer sauren wässrigen Flüssigkeit oder einer alkalischen wässrigen Flüssigkeit, bevorzugt Natronlauge,

- mindestens einer Carbonsäure, bevorzugt Ameisensäure und/oder Essigsäure, oder

- mindestens einem Alkohol, bevorzugt Ethanol.

Neben dem gelösten Lignin welches in der ersten Prozessstufe (Schritt a)) mit dem Vernetzer zur Reaktion gebracht wird, kann auch ungelöstes Lignin in der Flüssigkeit dispergiert vorliegen. Für das vorliegende Verfahren ist es also nicht notwendig, dass das gesamte Lignin in der Flüssigkeit gelöst vorliegt. In einigen Varianten sind mehr als 0,5%, mehr als 1%, mehr als 2,5%, mehr als 5% oder mehr als 10% des Trockenstoffes des ligninhaltigen Rohstoffes nicht gelöst. In einigen Varianten sind mehr als 0,5%, mehr als 1%, mehr als 2,5%, mehr als 5% oder mehr als 10% des Lignins des ligninhaltigen Rohstoffes nicht gelöst.

Es hat sich herausgestellt, dass die folgenden Eigenschaften der in Schritt a) (die erste Prozessstufe) eingetragenen Flüssigkeit, die den ligninhaltigen Rohstoff enthält, besonders für eine erfolgreiche Verfahrensführung geeignet sind:

- Vorteilhaft ist mehr als 50%, bevorzugt mehr als 60%, besonderes bevorzugt mehr als 70%, darüber hinaus bevorzugt mehr als 80% insbesondere mehr als 90%, darüber hinaus bevorzugt mehr als 95% des Trockenstoffes des ligninhaltigen Rohstoffes in der Flüssigkeit gelöst.
- Vorteilhaft ist mehr als 50%, bevorzugt mehr als 60%, besonders bevorzugt mehr als 70%, darüber hinaus bevorzugt mehr als 80% insbesondere mehr als 90% darüber hinaus bevorzugt mehr als 95% des Lignins des ligninhaltigen Rohstoffes in der Flüssigkeit gelöst.
- Vorteilhaft liegt der Trockenstoffgehalt der Flüssigkeit, die den ligninhaltigen Rohstoff enthält, bei mehr als 3%, besonders bevorzugt bei mehr als 4%, ganz besonders bevorzugt bei mehr als 5%.
- Vorteilhaft liegt der Trockenstoffgehalt der Flüssigkeit, die den ligninhaltigen Rohstoff enthält, bei weniger als 25% bevorzugt, bei weniger als 20%, besonders bevorzugt bei weniger als 18%.

In dieser Anmeldung beziehen sich Prozentangaben auf das Gewicht, sofern nicht anders angegeben.

Das Lignin des ligninhaltigen Rohstoffs umfasst Lignin, dass als Klasonlignin und als säurelösliches Lignin bestimmt werden kann. Klasonlignin beschreibt nach Tappi T 222 om-02 (https://www.tappi.org/content/SARG/T222.pdf) eine analytische Messgröße nach Behandlung in 72% $H_2SO_4$ und ist in dieser Analysemethode das zu quantifizierende Produkt. Das Lignin kann z.B. Kraftlignin, Lignosulfonat oder Hydrolyselignin sein, wobei Lignosulfonat in der Regel weniger bevorzugt ist. Das Lignin weist funktionelle Gruppen auf, über die eine Vernetzung möglich ist. Das Lignin kann z.B. phenolische Aromaten, aromatische und aliphatische Hydroxygruppen und/oder Carboxygruppen als vernetzbare Einheiten aufweisen.

**Bevorzugte Ausführungsformen der ersten Prozessstufe**

Das erfindungsgemäße Verfahren umfasst eine erste Prozessstufe, hier auch als Schritt a) bezeichnet, bei dem a) in der Flüssigkeit gelöstes Lignin mit mindestens einem Vernetzer in der Flüssigkeit bei einer Temperatur im Bereich von 50 bis 180°C umgesetzt wird, um gelöstes modifiziertes Lignin in der Flüssigkeit zu erhalten. Die Umsetzung wird zweckmäßigerweise in einer bewegten Flüssigkeit ausgeführt, wobei die Bewegung zum Beispiel durch Rühren oder Umwälzen der Flüssigkeit hervorgerufen werden kann. Vorzugsweise erfolgt Schritt a) bei einem pH-Wert der Flüssigkeit in einem Bereich von 7 bis 14, besonders bevorzugt von >7 bis 14, ganz besonders bevorzugt von 8 bis 13,5 und insbesondere von 9 bis 13, weiterhin bevorzugt maximal 12 wie im Fall von 9 bis 12, darüber hinaus bevorzugt maximal 11,5 wie im Fall von 9 bis 11,5.

In einer bevorzugten Ausführungsform der ersten Prozessstufe wird der Vernetzer zu der Flüssigkeit, die den ligninhaltigen Rohstoff enthält, zugegeben. Der Vernetzer kann gegebenenfalls auch vor oder während der Zugabe der Flüssigkeit zu dem ligninhaltigen Rohstoff zugesetzt werden. In einer alternativen Ausführungsform wird statt des Vernetzers eine Vorstufe des Vernetzers zugegeben, wobei in Schritt a) der Vernetzer in situ aus der Vorstufe gebildet wird. Die nachstehenden Angaben zum Vernetzer gelten auch für Vernetzer, die in situ aus einer Vorstufe gebildet werden.

Der Vernetzer weist mindestens eine funktionelle Gruppe auf, die mit den vernetzbaren Gruppen des Lignins reagieren kann. Der Vernetzer weist bevorzugt mindestens eine funktionelle Gruppe ausgewählt aus Aldehyd-, Carbonsäureanhydrid, Epoxid-, Hydroxyl- und Isocyanatgruppen oder einer Kombination davon auf.

Wenn der Vernetzer eine funktionelle Gruppe aufweist, die bei Abreaktion mit zwei vernetzbaren Gruppen des Lignins reagieren kann, wie z.B. eine Aldehyd-, Säureanhydrid- oder Epoxidgruppe, reicht eine solche funktionelle Gruppe aus. Ansonsten weist der Vernetzer mindestens zwei funktionelle Gruppen auf, wie z.B. Hydroxyl- oder Isocyanatgruppen, die mit den vernetzbaren Gruppen des Lignins reagieren können.

In einer bevorzugten Ausführungsform ist der mindestens eine Vernetzer ausgewählt aus mindestens einem Aldehyd, Epoxid, Säureanhydrid, Polyisocyanat oder Polyol, wobei der mindestens eine Vernetzer bevorzugt aus Aldehyden ausgewählt ist, besonders bevorzugt Formaldehyd, Furfural oder Zuckeraldehyden. Ein Polyisocyanat ist eine Verbindung mit mindestens zwei Isocyanatgruppen, wobei ein Diisocyanat oder Triisocyanat bevorzugt sind. Ein Polyol ist eine Verbindung mit mindestens zwei Hydroxygruppen, wobei ein Diol oder Triol bevorzugt sind.

In der ersten Prozessstufe (gemäß Schritt a)) wird insbesondere das in einer Flüssigkeit gelöste Lignin, das z.B. phenolische Aromaten, aromatische und aliphatische Hydroxygruppen und/oder Carboxygruppen als vernetzbare Einheiten aufweist, und mindestens ein Vernetzer, der mindestens eine funktionelle Gruppe als vernetzbare Einheit aufweist, die mit den vernetzbaren Einheiten des Lignins reagieren kann, bei einer erhöhten Temperatur über einen definierten Zeitraum zur Reaktion gebracht und so ein gelöstes modifiziertes Lignin erzeugt.

Beim Einsatz von bifunktionalen Vernetzern sind pro mol bifunktionalem Vernetzer zwei mol vernetzbare Einheiten verfügbar. Entsprechend sind beim Einsatz von trifunktionalen Vernetzern pro mol trifunktionalem Vernetzer drei mol vernetzbare Einheiten verfügbar, usw. Hier ist zu beachten, dass trotz Mehrfachfunktionalität des Vernetzers oftmals nur ein Teil der verfügbaren Gruppen reagiert, da die Reaktionsfreudigkeit mit dem Abreagieren der Gruppen abnimmt, zum einen aufgrund sterischer Hinderung, zum anderen aufgrund der Verschiebung von Ladungen.

Bei den folgenden Angaben bezieht sich eine vernetzbare Einheit des Vernetzers auf eine Einheit, die mit einer vernetzbaren Einheit des Lignins reagieren kann. Eine funktionelle Gruppe, die bei Abreaktion mit zwei vernetzbaren Gruppen des Lignins reagieren kann, wie z.B. eine Aldehyd-, Säureanhydrid- oder Epoxidgruppe, gilt dementsprechend als zwei vernetzbare Einheiten.

Bevorzugt wird die Dosierung des Vernetzers so vorgenommen, dass maximal 4 mol, bevorzugt maximal 3 mol, bevorzugter maximal 2,5 mol, besonders bevorzugt maximal 2 mol, noch bevorzugter maximal 1,75 mol, insbesondere maximal 1,5 mol vernetzbare Einheiten des Vernetzer pro mol damit vernetzbarer Einheiten des eingesetzten Lignins vorliegen.

Bevorzugt wird die Dosierung des Vernetzers so vorgenommen, dass mindestens 0,2 mol, bevorzugt 0,5 mol, weiter bevorzugt mindestens 0,75 mol, bevorzugter mindestens 1 mol, besonders bevorzugt mindestens 1,1 mol, insbesondere mindestens 1,15 mol vernetzbare Einheiten des Vernetzer pro mol damit vernetzbarer Einheiten des eingesetzten Lignins vorliegen.

Bevorzugt liegt die Dosierung des Vernetzers im Bereich von 0,2 mol bis 4 mol, bevorzugter bei 0,5 mol bis 3 mol, besonders bevorzugt bei 1 bis 2 mol.

Vernetzer können im Lignin mit freien ortho- und para-Positionen der phenolischen Ringe (phenolische Guajacylgruppen und p-Hydroxyphenylgruppen) reagieren. Geeignete Vernetzer zur Reaktion an freien ortho- und para-Positionen von phenolischen Ringen sind beispielsweise Aldehyde, wie Formaldehyd, Furfural, 5-Hydroxymethylfurfural (5-HMF), Hydroxybenzaldehyd, Vanillin, Syringaldehyd, Piperonal, Glyoxal, Glutaraldehyd oder Zuckeraldehyde. Bevorzugte Vernetzer für die Reaktion an phenolischen Ringen sind Formaldehyd, Furfural und Zuckeraldehyde (Ethanale und/oder Propanale), wie beispielsweise Glycerinaldehyd und Glycolaldehyd.

Weiterhin können Vernetzer mit aromatischen und aliphatischen OH-Gruppen (phenolische Guajacylgruppen, p-Hydroxyphenylgruppen, Syringylgruppen) im Lignin reagieren. Hierzu können beispielsweise bevorzugt bifunktionale und auch mehrfach funktionale Verbindungen mit Epoxidgruppen wie Glycidylether, Isocyanatgruppen, wie Diisocyanat oder oligomeres Diisocyanat oder Säureanhydride Anwendung finden. Bevorzugte Vernetzer für die Reaktion an aromatischen und aliphatischen OH-Gruppen sind Polyisocyanate, insbesondere Diisocyanate oder Triisocyanate, und Säureanhydride.

Vernetzer können außerdem mit Carboxylgruppen reagieren. Hierzu können beispielsweise Polyole, insbesondere Diole und Triole, Anwendung finden. Bevorzugte Vernetzer für die Reaktion mit Carboxylgruppen sind Diole.

Weiterhin können Vernetzer sowohl mit phenolischen Ringen, aromatischen und aliphatischen OH-Gruppen und Carboxylgruppen reagieren. Hierzu können beispielsweise bevorzugt bifunktionale und auch mehrfach funktionale Verbindungen mit mindestens zwei der oben genannten funktionellen Vernetzergruppen Anwendung finden.

Mit vernetzbaren Einheiten des eingesetzten Lignins sind beim Einsatz von Vernetzern, die mit dem phenolischen Ring reagieren, phenolische Guajacylgruppen und p-Hydroxyphenylgruppen gemeint. Die Konzentration an vernetzbaren Einheiten (mmol/g) wird zum Beispiel über 31P-NMR Spektroskopie (Podschun et al., European Polymer Journal, 2015, 67, 1-11) bestimmt, wobei Guajacylgruppen eine vernetzbare Einheit und p-Hydroxyphenylgruppen zwei vernetzbare Einheiten enthalten. Vorzugsweise weist das eingesetzte Lignin phenolische Guajacylgruppen auf, von denen in Schritt a) des erfindungsgemäßen Verfahrens mindestens 30%, vorzugsweise mindestens 40%, mittels des wenigstens einen Vernetzers modifiziert werden. Im Fall des Einsatzes von Formaldehyd als Vernetzer findet dabei eine teilweise Verbrückung im Rahmen einer Hydroxymethylierung statt.

Mit vernetzbaren Einheiten des eingesetzten Lignins sind beim Einsatz von Vernetzern, die mit aromatischen und aliphatischen OH-Gruppen reagieren, alle aromatischen und aliphatischen OH-Gruppen gemeint. Die Konzentration an vernetzbaren Einheiten (mmol/g) wird zum Beispiel über 31P-NMR Spektroskopie bestimmt, wobei eine OH-Gruppe eine vernetzbare Einheit entspricht.

Mit vernetzbaren Einheiten des eingesetzten Lignins sind beim Einsatz von Vernetzern, die mit Carboxygruppen reagieren, alle Carboxygruppen gemeint. Die Konzentration an vernetzbaren Einheiten (mmol/g) wird zum Beispiel über 31P-NMR Spektroskopie bestimmt, wobei eine Carboxylgruppe einer vernetzbaren Einheit entspricht.

Bevorzugt liegt die Menge an Vernetzer bei maximal 35 g / 100 g Lignin, bevorzugt bei maximal 30 g / 100 g Lignin, besonders bevorzugt bei maximal 25 g / 100 g Lignin.

Wenn Formaldehyd als Vernetzer eingesetzt wird, liegt die Menge an Formaldehyd bevorzugt bei maximal 25 g / 100 g Lignin, bevorzugter bei maximal 20 g / 100 g Lignin, besonders bevorzugt bei maximal 15 g / 100 g Lignin, insbesondere bei maximal 12 g / 100 g Lignin. So kann die Menge an zugegebenen Formaldehyd z.B. in einem Bereich zwischen 1-20 g/100 g Lignin, bevorzugt zwischen 5 - 15 g/100 g Lignin, besonders bevorzugt zwischen 6-10 g / 100 g Lignin liegen. Es besteht auch die Möglichkeit, stattdessen ganz oder teilweise Vorstufen von Vernetzern wie Formaldehyd oder anderen Aldehyden zur Flüssigkeit zu geben, aus denen in situ der eigentliche Vernetzer gebildet wird.

Wie bereits angesprochen, wird der Vernetzer in einer vorteilhaften Ausführungsform zumindest teilweise während der ersten Prozessstufe (Schritt a)) in situ erzeugt. Vorteil einer Erzeugung eines Vernetzers in der ersten Prozessstufe ist, dass die Menge an in die erste Prozessstufe zugegebenen Vernetzer reduziert werden oder ganz entfallen kann.

Vorteilhaft wird der Vernetzer während der ersten Prozessstufe in situ z.B. aus Kohlehydraten, bevorzugt Zellulose, Hemizellulosen oder Glukose, die in der das gelöste Lignin beinhaltenden Flüssigkeit dispergiert oder gelöst sind, erzeugt. Bevorzugt können der Flüssigkeit, die das gelöste Lignin beinhaltet, Kohlehydrate bevorzugt Zellulose, Hemizellulosen oder Glukose als Vorstufe des Vernetzers zugegeben werden oder diese sind bereits enthalten. Bei einer solchen vorteilhaften Verfahrensführung wird beispielsweise

- in einer ersten Prozessstufe gemäß Schritt a) des erfindungsgemäßen Verfahrens

    o ein kohlenhydrat-basierter Vernetzer, bevorzugt Aldehyd, bevorzugt Glycerinaldehyde oder Glycolaldehyd aus in der das gelöste Lignin beinhaltenden Flüssigkeit gelösten oder dispergierten Kohlenhydraten gewonnen,
    ◦ das in der Flüssigkeit gelöste Lignin und der kohlenhydrat-basierte Vernetzter zur Reaktion gebracht und so ein gelöstes modifiziertes Lignin erzeugt, und

- in einer zweiten Prozessstufe gemäß den Schritten b), c) und gegebenenfalls d) des erfindungsgemäßen Verfahrens das gelöste modifizierte Lignin in ein ungelöstes stabilisiertes Lignin in Partikelform überführt.

Vorteilhaft wird der Vernetzer während der ersten Prozessstufe in situ aus dem Lignin, das in der das gelöste Lignin beinhaltenden Flüssigkeit dispergiert oder gelöst ist, erzeugt. Bei einer solchen vorteilhaften Verfahrensführung wird beispielsweise

- in einer ersten Prozessstufe gemäß Schritt a) des erfindungsgemäßen Verfahrens

    o ein lignin-basierter Vernetzer, bevorzugt Aldehyde, bevorzugt Methandiol oder Glycolaldehyd, aus Lignin gewonnen, das in der das gelöste Lignin beinhaltenden Flüssigkeit gelöst oder dispergiert ist,

    ◦ das verbleibende, in der Flüssigkeit gelöste Lignin und der lignin-basierte Vernetzter zur Reaktion gebracht und so ein gelöstes modifiziertes Lignin erzeugt, und

- in einer zweiten Prozessstufe gemäß den Schritten b), c) und gegebenenfalls d) des erfindungsgemäßen Verfahrens das gelöste modifizierte Lignin in ein ungelöstes stabilisiertes Lignin in Partikelform überführt.

Die Umsetzung von gelöstem Lignin und Vernetzer in Schritt a) erfolgt bei einer Temperatur im Bereich von 50 bis 180°C, bevorzugt 60 bis 130°C und bevorzugter 70 bis 100°C. Besonders bevorzugt beträgt die Temperatur mehr als 70 °C.

Die Temperatur der ersten Prozessstufe (Schritt a)) liegt vorteilhaft bei mehr als 50°C bevorzugt mehr als 60°C, besonders bevorzugt mehr als 70°C und weniger als 180°C, bevorzugt weniger als 150°C, bevorzugter weniger als 130°C, besonders bevorzugt weniger als 100°C.

Vorteilhaft liegt die durchschnittliche Verweilzeit in der ersten Prozessstufe bei mindestens 5 Minuten, bevorzugter bei mindestens 10 Minuten, noch bevorzugter mindestens 15 Minuten besonders bevorzugt bei mindestens 30 Minuten, insbesondere bei mindestens 45 Minuten jedoch im Allgemeinen bei weniger als 400 Minuten, bevorzugt weniger als 300 Minuten.

Eine vorteilhafte Kombination aus Zeit- und Temperaturfenster für die erste Prozessstufe ist eine Temperatur im Bereich von 50°C bis 180°C bei einer Verweilzeit von mindestens 15 Minuten, bevorzugt mindestens 20 Minuten, bevorzugter mindestens 30 Minuten, besonders bevorzugt mindestens 45 Minuten. Eine alternativ vorteilhafte Kombination aus Zeit- und Temperaturfenster für die erste Prozessstufe ist eine Temperatur im Bereich von 50°C bis 130°C bei einer Verweilzeit von mindestens 10 Minuten bevorzugt mindestens 15 Minuten, weiter bevorzugt mindestens 20 Minuten, besonders bevorzugt mindestens 30 Minuten, insbesondere mindestens 45 Minuten.

In einer besonders bevorzugten Ausführungsform wird die Mischung aus gelöstem Lignin in der Flüssigkeit und der mindestens eine Vernetzer in der ersten Prozessstufe bei einer Temperatur zwischen 50°C und 180°C für eine Verweilzeit von mindestens 20 Minuten, bevorzugt mindestens 60 Minuten gehalten.

In einer weiteren besonders bevorzugten Ausführungsform wird die Mischung aus gelöstem Lignin in der Flüssigkeit und der mindestens eine Vernetzer in der ersten Prozessstufe bei einer Temperatur zwischen 70°C und 130°C für eine Verweilzeit von mindestens 10 Minuten, bevorzugt mindestens 50 Minuten gehalten.

In einer weiteren besonders bevorzugten Ausführungsform wird die Mischung aus gelöstem Lignin in der Flüssigkeit und der mindestens eine Vernetzer in der ersten Prozessstufe bei einer Temperatur zwischen 50°C und 110°C, besonders bevorzugt zwischen mehr als 70°C und 110 °C, für eine Verweilzeit von mindestens 10 Minuten, bevorzugt mindestens 180 Minuten gehalten.

Vorteilhaft kann während der ersten Prozessstufe eine Aufheizung der das gelöste Lignin und den Vernetzer beinhaltenden Flüssigkeit realisiert werden. Dabei liegt die Aufheizrate bevorzugt bei weniger als 15 Kelvin pro Minute, bevorzugter bei weniger als 10 Kelvin pro Minute und besonders bevorzugt bei weniger als 5 Kelvin pro Minute.

Vorteilhaft wird die Temperatur in der ersten Prozessstufe über eine Zeit von mindestens 5 Minuten, bevorzugt mindestens 10 Minuten, weiter bevorzugt mindestens 15 Minuten, besonders bevorzugt mindestens 30 Minuten weitgehend konstant gehalten.

Vorteilhaft ist auch eine Kombination aus einer Aufheizung und Konstanthaltung der Temperatur in der ersten Prozessstufe.

Der Druck in der ersten Prozessstufe liegt bevorzugt mindestens 0,1 bar, bevorzugt mindestens 0,2 bar und bevorzugt maximal 5 bar oberhalb des Sattdampfdrucks der das Lignin beinhaltenden Flüssigkeit. Die Umsetzung kann z.B. bei einem Druck im Bereich von Atmosphärendruck bis 1 bar über dem Atmosphärendruck, insbesondere bei einem Druck, der bevorzugt bis zu 500 mbar über dem Atmosphärendruck liegt, durchgeführt werden.

**Bevorzugte gelöste modifizierte Lignine**

Aus der ersten Prozessstufe tritt eine Mischung aus, die ein gelöstes modifiziertes Lignin und eine Flüssigkeit umfasst und geeignet ist, daraus in einer zweiten Prozessstufe stabilisierte Ligninpartikel herzustellen.

Es hat sich herausgestellt, dass die folgenden Eigenschaften des aus der ersten Prozessstufe ausgetragenen und in die zweite Prozessstufe eingetragenen Mischung besonders für eine erfolgreiche Verfahrensführung geeignet sind:

- Vorteilhaft ist mehr als 50%, bevorzugt mehr als 60%, besonderes bevorzugt mehr als 70%, darüber hinaus bevorzugt mehr als 80% insbesondere mehr als 90% des Trockenstoffes der Mischung in der Flüssigkeit gelöst.
- Vorteilhaft ist mehr als 50%, bevorzugt mehr als 60%, besonders bevorzugt mehr als 70%, darüber hinaus bevorzugt mehr als 80% insbesondere mehr als 90% des Lignins der Mischung in der Flüssigkeit gelöst.
- Vorteilhaft liegt der Trockenstoffgehalt der Mischung bei mehr als 3%, besonders bevorzugt bei mehr als 4%, ganz besonders bevorzugt bei mehr als 5%.
- Vorteilhaft liegt der Trockenstoffgehalt der Mischung bei weniger als 25%, bevorzugt bei weniger als 20%, besonders bevorzugt bei weniger als 18%.
- Vorteilhaft sind die Aromaten des enthaltenen Lignins vornehmlich über Etherbindungen verbunden.
- Vorteilhaft ist der Anteil an para-substituierten phenolischen Ringen am gesamten Anteil an aromatischen Ringen größer als 95%, bevorzugt größer als 97% insbesondere bevorzugt größer als 99%.
- Vorteilhaft liegt der Gehalt an freiem Phenol bei unter 200 ppm, bevorzugt bei unter 100 ppm, darüber hinaus bevorzugt bei unter 75 ppm, insbesondere bevorzugt bei unter 50 ppm.

- Vorteilhaft beträgt der Gehalt an Klasonlignin bezogen auf den Trockenstoff mindestens 70%, bevorzugt mindestens 75%, besonders bevorzugt mindestens 80% insbesondere mindestens 85%.
- Vorteilhaft ist der Anteil an Guajacyl- und p-Hydrohyphenyleinheiten mit freier ortho-Position im phenolischen Ring kleiner 50%, bevorzugt kleiner 40%, besonders bevorzugt kleiner 30% der gesamten phenolischen OH-Gruppen.

Der Gehalt an freiem Phenol wird dabei nach DIN ISO 8974 bestimmt. Der Gehalt an Klasonlignin wird als säureunlösliches Lignin nach TAPPI T 222 bestimmt. Die Quantifizierung und Qualifizierung der phenolischen OH-Guppen wird mittels 31P-NMR nach M. Zawadzki, A. Ragauskas (Holzforschung 2001, 55, 3) bestimmt.

Es wird davon ausgegangen, dass durch die Umsetzung ein modifiziertes gelöstes Lignin erhalten wird, bei dem Lignin mit dem Vernetzer reagiert hat, aber eine Vernetzung über den Vernetzer nicht oder nur teilweise erfolgt ist. Anders ausgedrückt, das Vernetzermolekül kann an einer Stelle mit Lignin verbunden sein, eine zweite Anbindung des Vernetzermoleküls an Lignin unter Ausbildung der Vernetzung ist aber nicht oder nur teilweise erfolgt.

**Bevorzugte Ausführungsformen der zweiten Prozessstufe**

Vorteilhafte Ausführungsformen der Herstellung von Partikeln aus dem gelösten modifizierten Lignin im Beisein der Flüssigkeit sind im Folgenden offengelegt: Die zweite Prozessstufe umfasst einen Fällungsschritt (Schritt b)) und einen Abtrennschritt (Schritt c)), wobei zur Stabilisierung der Ligninpartikel eine Wärmebehandlung in Schritt b) nach der Fällung und/oder eine Wärmebehandlung im Anschluss an Schritt c) in einem zusätzlichen Schritt d) erfolgt. Die zweite Prozessstufe umfasst somit den Schritt b) und den Schritt c) sowie gegebenenfalls den zusätzlichen Schritt d).

Die Stabilisierung der Ligninpartikel kann somit im Nassen (Schritt b)) und/oder im Trockenen (Schritt d)) erfolgen. Die Stabilisierung der Ligninpartikel kann entweder in Schritt b) oder in einem zusätzlichen Schritt d) durchgeführt oder sie kann sowohl in Schritt b) als auch in Schritt d) durchgeführt werden.

Das erfindungsgemäße Verfahren umfasst in Schritt b) ein Fällen des in Schritt a) erhaltenen gelösten modifizierten Lignins durch Mischen der Flüssigkeit mit einem Fällungsmittel bei einer Temperatur im Bereich von 0 bis unter 150°C, um Ligninpartikel in der Flüssigkeit zu bilden. Vorzugsweise erfolgt die Fällung gemäß Schritt b) bei einer Temperatur in einem Bereich von 0 bis unter 100 °C, besonders bevorzugt von 0 bis unter 80°C, weiterhin bevorzugt bei 0 bis 50°C, ganz besonders bevorzugt von 0 bis unter 40°C, insbesondere von 10 bis unter 30°C. Bevorzugt beträgt die Temperatur mindestens 10°C, weiter bevorzugt mindestens 15°C, darüber hinaus bevorzugt mindestens 20 °C.

In diesem Schritt wird die aus Schritt a) erhaltene Flüssigkeit, die das gelöste modifizierte Lignin enthält, mit einem Fällungsmittel gemischt. Dabei kann das Fällungsmittel in die Flüssigkeit gegeben werden oder die Flüssigkeit wird in das Fällungsmittel gegeben. Die Mischung kann durch Bewegung hervorgerufen durch Rühren oder Umwälzen der Flüssigkeit unterstützt werden, wobei übliche Mischeinrichtungen eingesetzt werden können.

Fällungsmittel sind Stoffe oder Stoffgemische, welche die Ausfällung gelöster Stoffe zu unlöslichen Feststoffen (Niederschlag) bewirken. Im vorliegenden Fall bewirkt das Fällungsmittel die Bildung der Ligninpartikel (feste Teilchen) als unlöslichen Feststoff in der Flüssigkeit, so dass eine Dispersion oder Aufschlämmung der Ligninpartikel in der Flüssigkeit erhalten wird. Es versteht sich, dass die Wahl eines geeigneten Fällungsmittels unter anderem von der Art der eingesetzten Flüssigkeit abhängt.

Beispiele für vorteilhafte Fällungsmittel sind Säuren, insbesondere wässrige Säuren, bevorzugt Schwefelsäure, Essigsäure oder Ameisensäure, oder saure Gase, wie z.B. $CO_2$ oder $H_2S$ oder eine Kombination von $CO_2$ oder $H_2S$, insbesondere, wenn die in die erste Prozessstufe eintretende Mischung einen pH-Wert von mehr als 5, bevorzugt mehr als 6, weiter bevorzugt mehr als 7, besonders bevorzugt mehr als 8 aufweist.

Ein weiteres Beispiel für ein vorteilhaftes Fällungsmittel ist Wasser, insbesondere, wenn die in die erste Prozessstufe eintretende Mischung Alkohole oder Carbonsäuren enthält.

Ein weiteres Beispiel für ein vorteilhaftes Fällungsmittel sind Salze, Salzgemische und salzhaltige wässrige Lösungen, besonders die Salze bzw. mit den Salzen der Alkali-und Erdalkalimetale, insbesondere mit sauerstoffhaltigen Anionen, bevorzugt, Sulfate, Carbonate und Phosphate insbesondere bevorzugt Natriumsalze, wie z.B. Natriumcarbonat und/oder Natriumsulfat, oder Mischungen davon, sowie wässrige Lösungen, die diese Salze oder Mischungen davon enthalten.

In einer bevorzugten Ausführungsform ist das Fällungsmittel ausgewählt aus mindestens einer Säure, bevorzugt einer wässrigen Säure, einem sauren Gas, einer Base, bevorzugt einer wässrigen Base, Wasser, oder einem Salz, bevorzugt einer salzhaltigen wässrigen Lösung, wobei das Fällungsmittel bevorzugt ausgewählt ist aus einer Säure, bevorzugt einer wässrigen Säure, und Wasser. Bevorzugte Konzentrationen einer eingesetzten wässrigen Säure in Wasser sind weniger als 20%, weiter bevorzugt weniger als 15%, darüber hinaus bevorzugt weniger als 10%.

Wenn die aus Schritt a) erhaltene Flüssigkeit, eine wässrige Base, bevorzugt Natronlauge, umfasst oder ist, ist das Fällungsmittel bevorzugt eine Säure, bevorzugt eine wässrige Säure. Wenn die aus Schritt a) erhaltene Flüssigkeit eine Carbonsäure, bevorzugt Ameisensäure und/oder Essigsäure, oder mindestens ein Alkohol, bevorzugt Ethanol, umfasst oder ist, ist das Fällungsmittel bevorzugt Wasser.

Es ist bevorzugt, dass in Schritt b) der pH-Wert der Flüssigkeit nach dem Mischen mit dem Fällungsmittel und gegebenenfalls einem Fälladditiv weniger als 10 beträgt.

Vorteilhaft erfolgt die Herstellung der Partikel aus dem gelösten modifizierten Lignin im Beisein der Flüssigkeit in der zweiten Prozessstufe durch Fällung bei einem pH-Wert von weniger als 10, bevorzugt weniger als 9,5, bevorzugt weniger als 9, bevorzugt weniger als 8,5, bevorzugt weniger als 8, bevorzugt weniger als 7,5, bevorzugt weniger als 7, bevorzugt weniger als 6,5, bevorzugt weniger als 6, bevorzugt weniger als 5,5, bevorzugt weniger als 5, bevorzugt weniger als 4,5, bevorzugt bei weniger als 4, bevorzugt bei weniger als 3,5, bevorzugt bei weniger als 2 oder bevorzugt bei weniger als 1,5 oder bei weniger als 1,0 oder bei weniger als 0,5 oder bei bis zu einem pH-Wert von 0. Vorzugsweise erfolgt die Herstellung der Partikel aus dem gelösten modifizierten Lignin im Beisein der Flüssigkeit in der zweiten Prozessstufe jedoch durch Fällung bei einem pH-Wert in einem Bereich von 0,5 bis 9, besonders bevorzugt von 1,0 bis 8,5, ganz besonders bevorzugt von 1,5 bis 8,0, noch bevorzugter von 2,0 bis 7,5, noch bevorzugter von 2,5 oder >2,5 bis 7,0, noch bevorzugter von >2,5 oder 3,0 bis 6,0, am meisten bevorzugt von >2,5 oder 3,0 bis <6,0 oder <5,5.

Vorteilhaft erfolgt die Herstellung der Partikel aus dem gelösten modifizierten Lignin im Beisein der Flüssigkeit in der zweiten Prozessstufe durch Fällung durch Absenkung des pH-Werts auf weniger als 10, bevorzugt weniger als 9,5, bevorzugt weniger als 9, bevorzugt weniger als 8,5, bevorzugt weniger als 8, bevorzugt weniger als 7,5, bevorzugt weniger als 7, bevorzugt weniger als 6,5, bevorzugt weniger als 6, bevorzugt weniger als 5,5, bevorzugt weniger als 5, bevorzugt weniger als 4,5, bevorzugt bei weniger als 4, bevorzugt bei weniger als 3,5. Vorzugsweise erfolgt die Herstellung der Partikel aus dem gelösten modifizierten Lignin im Beisein der Flüssigkeit in der zweiten Prozessstufe durch Fällung durch Absenkung des pH-Werts auf einen pH-Wert in einem Bereich von 0,5 bis 9, besonders bevorzugt von 1,0 bis 8,5, ganz besonders bevorzugt von 1,5 bis 8,0, noch bevorzugter von 2,0 bis 7,5, noch bevorzugter von 2,5 oder >2,5 bis 7,0, noch bevorzugter von >2,5 oder 3,0 bis 6,0, am meisten bevorzugt von >2,5 oder 3,0 bis <6,0 oder <5,5.

Der pH-Wert wird während der Herstellung von Ligninpartikeln aus dem gelösten modifizierten Lignin im Beisein der Flüssigkeit bevorzugt soweit abgesenkt, dass das Partikel-Flüssigkeitsgemisch kein Gel bildet oder sich gegebenenfalls gebildetes Gel wieder auflöst. Erfindungsgemäß liegt das Lignin bei der Abtrennung in Schritt c) insbesondere in Partikelform vor, also als Dispersion und nicht als gelierte Flüssigkeit.

Die Fällung erfolgt durch Mischen der Flüssigkeit mit dem Fällungsmittel bei einer Temperatur im Bereich von 0 bis unter 150°C. Vorzugsweise erfolgt die Fällung bei einer Temperatur in einem Bereich von 0 bis unter 100 °C, besonders bevorzugt von 0 bis unter 80°C, weiterhin bevorzugt bei 0 bis 50°C, ganz besonders bevorzugt von 0 bis unter 40°C, insbesondere von 10 bis unter 30°C. Bevorzugt beträgt die Temperatur mindestens 10°C, weiter bevorzugt mindestens 15°C, darüber hinaus bevorzugt mindestens 20 °C. Bei der Fällung werden aus dem gelösten modifizierten Lignin Ligninpartikel gebildet. Eine gegebenenfalls weitere Behandlung in Schritt b) hängt davon ab, welche der nachstehenden Alternativen für die Stabilisierung der gebildeten Ligninpartikel durchgeführt wird. Jedenfalls erfolgt der Schritt b), der nach der Fällung auch eine Alterungs- oder Wärmebehandlung beinhalten kann, bis zur Abtrennung der Flüssigkeit von den Ligninpartikeln im Allgemeinen in einem Temperaturbereich von 0 bis unter 150°C.

Zur Stabilisierung der Ligninpartikel wird die mit dem Fällungsmittel vermischte Flüssigkeit bei einer Temperatur im Bereich von 60 bis 200 °C, vorzugsweise von 80 bis 170 °C, besonders bevorzugt von 80 °C oder 100 °C bis 160 °C, ganz besonders bevorzugt von 80 °C bis unter 150°C, wärmebehandelt, und/oder werden in einem zusätzlichen Schritt d) nach Schritt c) die von der Flüssigkeit abgetrennten Ligninpartikel bei einer Temperatur im Bereich von 60 bis 600°C wärmebehandelt.

Für den Fall, dass die Stabilisierung der Ligninpartikel durch die Wärmebehandlung im zusätzlichen Schritt d) erfolgt, wird die Fällung in Schritt b) bevorzugt bei einer Temperatur der Flüssigkeit im Bereich von 0 bis unter 100°C, bevorzugt 0 bis unter 90°C, durchgeführt. Die Fällung kann in diesem Fall z.B. bei Umgebungstemperatur durchgeführt werden, z.B. im Bereich von 10 bis 40°C. Vorzugsweise erfolgt die Fällung jedoch bei einer Temperatur in einem Bereich von 0 bis unter 40°C, insbesondere von 10 bis unter 30°C. Auch wenn keine Wärmebehandlung zur Stabilisierung in Schritt b) erfolgen soll, kann es gegebenenfalls zweckmäßig sein, die gebildeten Ligninpartikel zur Alterung eine gewisse Zeit in der Flüssigkeit zu halten, z.B. bei vorstehend genannten Temperaturen.

Für den Fall, dass die Stabilisierung der Ligninpartikel durch die Wärmebehandlung der mit dem Fällungsmittel gemischten Flüssigkeit in Schritt b) erfolgt, kann die Wärmebehandlung in Schritt b) bevorzugt bei einer Temperatur der Flüssigkeit im Bereich von 60 bis 200 °C, vorzugsweise von 80 bis 170 °C, besonders bevorzugt von 80 °C oder 100 °C bis 160 °C, ganz besonders bevorzugt von 80 bis unter 150°C, bevorzugter 90 bis 148°C, noch bevorzugter 100 bis 148°C erfolgen. In diesem Fall der Wärmebehandlung in Schritt b) liegt die Temperatur bevorzugt bei maximal 180°C oder bei maximal 160 °C oder bei maximal unter 150 °C oder bei maximal 140°C, besonders bevorzugt bei maximal 130°C, bevorzugter bei maximal 120°C, insbesondere bei maximal 110°C, sowie bei mindestens 80°C, bevorzugt bei mindestens 90°C, besonders bevorzugt bei mindestens 100°C. Durch die Wärmebehandlung können die gebildeten Ligninpartikel stabilisiert werden. Die Höchsttemperatur liegt vorzugsweise zumindest dann unter 150 °C, wenn als Fällungsmittel eine Base, bevorzugt eine wässrige Base eingesetzt wird

Vorzugsweise erfolgt die Wärmebehandlung in Schritt b) nach der Fällung in einem der vorgenannten Temperaturbereiche für eine Dauer von mindestens 2 Minuten, mindestens 3 Minuten, mindestens 4 Minuten, mindestens 5, 6, 7, 8, 9 oder mindestens 10 Minuten, vorzugsweise mindestens 11, 12, 13, 14, 15, 16, 17, 17, 19 oder mindestens 20 Minuten, besonders bevorzugt mindestens 21, 22, 23, 24 oder 25 Minuten oder mindestens 30, 35, 40, 45, 50, 55, 60, 65, 70, 75, 80, 85, 90, 95 oder 100 Minuten. Vorzugsweise erfolgt die Dauer der Wärmebehandlung nach der Fällung in Schritt b) in einem Bereich von 5 oder 7,5 Minuten bis 5 Stunden, vorzugsweise von 10 oder 12,5 Minuten bis 4,5 Stunden, besonders bevorzugt von 15 oder 17,5 Minuten bis 4 Stunden, ganz besonders bevorzugt von 20 oder 22,5 Minuten bis 3,5 Stunden, insbesondere von 25, 27,5 oder 30 Minuten bis 3 Stunden. Vorzugsweise beträgt die Maximaldauer der Wärmebehandlung in Schritt b) 5,5, 5, 4,5, 4, 3,5, 3, 2,5, 2, 1,5 oder 1 Stunde(n). Wie bereits vorstehend ausgeführt können durch die Länge der Behandlungsdauer die Alkalilöslichkeit der Ligninpartikel und/oder der Gehalt an aus ihnen ausgasbaren organischen Verbindungen (Emissionen), bestimmt gemäß Thermodesorptionsanalyse nach VDA 278 (05/2016), positiv beeinflusst bzw. eingestellt werden. Auch die Partikelgröße und die STSA-Oberfläche können dadurch beeinflusst werden.

Vorteilhaft wird für die Fällung zusätzlich zum Fällungsmittel ein Fälladditiv eingesetzt. Das Fälladditiv kann zu der Flüssigkeit vor, während oder nach der Vermischung mit dem Fällungsmittel zugesetzt werden. Das Fälladditiv bewirkt eine Erhöhung bzw. Verbesserung der Solvatisierung des gelösten modifizierten Lignins und/oder der Ligninpartikel. Beispiele für geeignete Fälladditive sind polare organische Lösungsmittel, wie Alkohole, z.B. Ethanol, oder Ketone, z.B. Aceton. Ein bevorzugtes Fälladditiv ist Aceton.

Der Schritt b) kann bei Atmosphärendruck oder Überdruck durchgeführt werden. Insbesondere wenn Schritt b) bei einer erhöhten Temperatur durchgeführt wird, z.B. bei 80°C oder mehr, insbesondere 90°C oder mehr, wird bevorzugt Überdruck eingesetzt, z.B. maximal 5 bar über Sattdampfdruck. Die Durchführung bei Überdruck ist vorteilhaft, um ein Verdampfen der Flüssigkeit möglichst weitgehend zu vermeiden.

In einer bevorzugten Ausführungsform liegt der Trockenstoffgehalt der Flüssigkeit in Schritt b) nach der Mischung mit Fällungsmittel und gegebenenfalls dem Fälladditiv bei mindestens 2 Gew.-%, besonders bevorzugt bei mindestens 3 Gew.-%, ganz besonders bevorzugt bei mindestens 4 Gew.-%. Dabei liegt der Trockenstoffgehalt jeweils vorzugsweise bei <26 Gew.-%, besonders bevorzugt bei <24 Gew.-%, ganz besonders bevorzugt bei < 20 Gew.-%.

Nach der Fällung und einer gegebenenfalls durchgeführten Wärmebehandlung oder Alterung der Flüssigkeit mit den darin gebildeten Ligninpartikeln, wird in Schritt c) die Flüssigkeit von den in Schritt b) gebildeten Ligninpartikeln abgetrennt. Vorteilhafte Ausführungsformen der Abtrennung der Flüssigkeit von den Partikeln sind im Folgenden offengelegt:

Zur Trennung der gebildeten Ligninpartikel von der Flüssigkeit können alle üblichen Feststoff-Flüssigkeits-Trennverfahren eingesetzt werden. Bevorzugt wird die Flüssigkeit durch Filtration oder Zentrifugation von den Partikeln abgetrennt. Bei Verwendung der Filtration oder Zentrifugation wird bevorzugt ein Trockenstoffgehalt von mehr als 15%, bevorzugt mehr als 20%, weiter bevorzugt mehr als 25% besonders bevorzugt mehr als 30% und von weniger als 60%, bevorzugt weniger als 55%, weiter bevorzugt weniger als 50%, insbesondere bevorzugt von weniger als 45% darüber hinaus bevorzugt von weniger als 40% erreicht. Eine weitere Möglichkeit zur Abtrennung der Ligninpartikel ist die Abdampfung der Flüssigkeit, z.B. bei erhöhter Temperatur und/oder verringertem Druck. Die Abtrennung umfasst in der Regel auch eine Wäsche und/oder Trocknung. Die zur Wäsche eingesetzte Waschlösung weist dabei vorzugsweise einen pH-Wert auf, der im leicht alkalischen Bereich liegt, besonders bevorzugt in einem Bereich von >7,0 bis 10, bevorzugt >7 bis 9, weiter bevorzugt >7 bis 8,5.

Im Anschluss an die Abtrennung, insbesondere durch Zentrifugation oder Filtration, kann z.B. vorteilhaft eine Wäsche der Partikel mit einer Flüssigkeit erfolgen. Bevorzugt unterscheidet sich der pH-Wert der verwendeten Waschflüssigkeit nur um maximal 4, bevorzugt maximal 2 Einheiten von dem pH-Wert der Flüssigkeit vor der Abtrennung der Partikel.

Schließlich werden die Ligninpartikel in der Regel getrocknet, wobei zumindest ein Teil der restlichen Flüssigkeit bevorzugt durch deren Verdampfung entfernt wird, z.B. durch Erwärmen und/oder Druckverringerung. Sofern der nachstehend beschriebene zusätzliche Schritt d) durchgeführt wird, kann die Trocknung teilweise oder vollständig Bestandteil der Stabilisierung in Schritt d) sein. Die in Schritt d) eingesetzten von der Flüssigkeit abgetrennten Ligninpartikel können bereits zum Teil getrocknet sein oder noch einen restlichen Anteil an Flüssigkeit enthalten. Im Verlauf der Wärmebehandlung kann dann zumindest ein Teil der restlichen Flüssigkeit abdampft werden. Unabhängig davon, ob ein zusätzlicher Schritt d) durchgeführt wird oder nicht, ist es bevorzugt, trockene stabilisierte Ligninpartikel als Endprodukt zu erhalten. Bevorzugt liegt der Trockenstoffgehalt bei mehr als 90%, weiter bevorzugt bei mehr als 92%, insbesondere bei mehr als 95%. In der vorliegenden Erfindung werden daher unter trockenen Partikeln Partikel mit einem Trockenstoffgehalt von mehr als 90%, weiter bevorzugt von mehr als 92%, insbesondere von mehr als 95% verstanden.

Wie beschrieben wird alternativ oder zusätzlich zur Stabilisierung der Ligninpartikel in Flüssigkeit in Schritt b) eine Stabilisierung der gebildeten Ligninpartikel in einem zusätzlichen Schritt d) nach Schritt c) durchgeführt. Die von der Flüssigkeit abgetrennten Ligninpartikel, insbesondere die trockenen Partikel, werden dabei bei einer Temperatur im Bereich von 60 bis 600°C wärmebehandelt, wobei die Temperatur bevorzugt im Bereich von 80 bis 400°C, bevorzugter 80 bis 300°C, weiter bevorzugt 80 bis 240 °C, noch weiter bevorzugt 90 bis 130°C, liegt. Es kann zweckmäßig sein, die Wärmebehandlung im Vakuum oder mit reduziertem Sauerstoffgehalt unter Einsatz von Inertgasen, mit z.B. weniger als 5 Volumenprozent $O_2$ durchzuführen, insbesondere wenn die Temperatur über 150°C ist, um die Partikel durch Inertisierung vor unerwünschten Reaktionen zu schützen. Die Dauer der Wärmebehandlung ist stark von der eingesetzten Temperatur abhängig, kann aber z.B. im Bereich von 1 Minuten bis 48 Stunden, vorzugsweise von 1 Minute bis 24 Stunden, bevorzugt 10 Minuten bis 18 Stunden oder 30 Minuten bis 12 Stunden liegen.

Die Überführung des in einer Flüssigkeit gelösten modifizierten Lignins in stabilisierte Ligninpartikel in der zweiten Prozessstufe erfolgt in einer bevorzugten Ausführungsform in mehreren Prozessschritten, wobei mindestens die folgenden durchlaufen werden: Herstellung von Ligninpartikeln aus dem gelösten modifizierten Lignin im Beisein einer Flüssigkeit in Schritt b), Abtrennung der Flüssigkeit von den Partikeln in Schritt c), Trocknung und Wärmebehandlung durch Erhitzung der trockenen Ligninpartikel in Schritt d).

Die Temperatur der Wärmebehandlung zur Stabilisierung der Ligninpartikel in Schritt d) liegt bei maximal 600°C, z.B. bevorzugt maximal 550°C, maximal 500°C, maximal 475°C, maximal 450°C, maximal 425°C, maximal 400°C, maximal 375°C, maximal 350°C, maximal 325°C, maximal 300°C, maximal 270°C, maximal 260°C, maximal 250°C, maximal 240°C, maximal 230°C, maximal 220°C, maximal 215°C.

Vorteilhaft erfolgt die Trocknung der Partikel mindestens teilweise durch Verdampfung der Flüssigkeit, wobei die Temperatur der Partikel während der Verdampfung maximal 150°C, bevorzugt maximal 130°C, besonders bevorzugt maximal 120°C, noch bevorzugter maximal 110°C, besonders bevorzugt maximal 100°C, insbesondere bevorzugt maximal 90°C beträgt.

Vorteilhafterweise erfolgt die Erhitzung der trockenen Partikel in der zweiten Prozessstufe auf eine Partikeltemperatur von mindestens 60°C bevorzugt mindestens 80°C, 90°C, 100°C, 110°C, 120°C, 130°C, 140°C, 150°C, 160°C, 170°C, 180°C, 190°C, 200°C.

Vorteilhafterweise erfolgt die Erhitzung der trockenen Partikel in der zweiten Prozessstufe auf eine Partikeltemperatur von maximal 600°C, bevorzugt maximal 550°C, 500°C, 475°C, 450°C, 425°C, 400°C, 375°C, 350°C, 325°C, 300°C, 270°C, 260°C, 250°C, 240°C, 230°C, 220°C, 215°C.

Die Wärmebehandlung der trockenen Ligninpartikel kann z.B. bei einem Druck in einem Bereich von mindestens 200 mbar bevorzugt vom mindestens 500 mbar, besonders bevorzugt von mindestens 900 mbar bis maximal 1500 mbar erfolgen.

**Bevorzugte stabilisierte Ligninpartikel**

Das erfindungsgemäße Verfahren dient zur Herstellung eines stabilisierten Lignins in Partikelform. Vorzugsweise wird das nach Schritt c) oder nach Schritt d) erhaltene stabilisierte Lignin keiner weiteren Umsetzung mehr unterworfen, mittels derer Sulfonsäuregruppen und/oder deren Anionen eingeführt werden. Insbesondere wird keine Sulfonierung des nach Schritt c) oder nach Schritt d) erhaltenen stabilisierten Lignins durchgeführt. Insbesondere sieht das gesamte erfindungsgemäße Verfahren keinen Sulfonierungsschritt vor. Das durch das erfindungsgemäße Verfahren erhaltene Lignin liegt in Partikelform vor, also als Ligninpartikel, wobei das im Verfahren erhaltene Endprodukt bevorzugt ein trockenes oder getrocknetes Pulver ist. Es handelt sich somit um feste Teilchen, die dispergiert in einer Flüssigkeit oder als getrocknetes bzw. trockenes Pulver vorliegen. Die Stabilisierung der Ligninpartikel führt zu verbesserten Eigenschaften, z.B. zu einer verringerten Löslichkeit in alkalischen Flüssigkeiten und/oder einem erhöhten Glasübergangspunkt bzw. keinem messbaren Glasübergangspunkt. Bei stabilisierten Ligninpartikeln handelt es sich insbesondere bevorzugt um Ligninpartikel mit einer Glasübergangstemperatur von mehr als 160°C, bevorzugt mehr als 180°C, besonders bevorzugt mehr als 200°C, insbesondere mehr als 250°C. Bevorzugt kann bei den stabilisierten Ligninpartikeln keine Glasübergangstemperatur gemessen werden.

Die Messung der Glasübergangstemperatur erfolgt nach DIN 53765.

Die stabilisierten Ligninpartikel, die nach dem erfindungsgemäßen Verfahren erhalten werden, besitzen noch weitere vorteilhafte Partikeleigenschaften, die einen Einsatz in Materialanwendungen ermöglichen. Vorzugsweise erfolgt nach Schritt d) eine Mahlung der Ligninpartikel, besonders bevorzugt in dem Maße, dass diese einen d50-Wert und/oder d99-Wert wie nachstehend definiert aufweisen.

Bevorzugt haben die stabilisierten Ligninpartikel einen d50-Wert (Volumenmittel) der Korngrößenverteilung von weniger als 500 μm, bevorzugt weniger als 300 μm, weiter bevorzugt von weniger als 200 μm, insbesondere weniger als 100 μm, insbesondere bevorzugt weniger als 50 μm, am meisten bevorzugt weniger als 20 μm.

Bevorzugt haben die stabilisierten Ligninpartikel einen d99-Wert (Volumenmittel) der Korngrößenverteilung von weniger als 600 μm, bevorzugt weniger als 400 μm, weiter bevorzugt von weniger als 300 μm, insbesondere weniger als 250 μm, insbesondere bevorzugt weniger als 200 μm, am meisten bevorzugt weniger als 150 μm.

Des Weiteren sind die Parameter d50 und d90 sowie d99 der Korngrößenverteilungen der getrockneten, stabilisierten Ligninpartikel zum Ende der zweiten Prozessstufe im Vergleich zum Zeitpunkt vor der Abtrennung der Flüssigkeit in der zweiten Prozessstufe bevorzugt um maximal das 20-fache, weiter bevorzugt um maximal das 15-fache, besonders bevorzugt um maximal das 10-fache insbesondere um maximal das 5-fache erhöht.

Die Messung der Korngrößenverteilung des stabilisierten Lignins erfolgt in einer Suspension mit destilliertem Wasser mittels Laserbeugung nach ISO 13320. Vor und/oder während der Messung der Korngrößenverteilung wird die zu vermessende Probe mit Ultraschall solange dispergiert, bis eine über mehrere Messungen stabile Korngrößenverteilung erhalten wird. Diese Stabilität ist erreicht, wenn die einzelnen Messungen einer Messreihe z.B. des d50 nicht mehr als 5% voneinander abweichen.

Bevorzugt haben die stabilisierten Ligninpartikel eine STSA von mindestens 2 m²/g, bevorzugt von mindestens 5 m²/g, weiter bevorzugt von mindestens 10 m²/g, weiter bevorzugt mindestens 20 m²/g. Bevorzugt liegt die STSA bei weniger als 200 m²/g, besonders bevorzugt weniger als 180 m²/g, weiter bevorzugt bei weniger als 150 m²/g, insbesondere bevorzugt bei weniger als 120 m²/g. STSA *(statistical thickness surface area)* ist dabei eine Angabe der äußeren Oberfläche der stabilisierten Ligninpartikel.

In einer Variante des vorliegenden stabilisierten Lignins bzw. partikelförmigen Kohlenstoffmaterials weist die STSA-Oberfläche Werte zwischen 10 m²/g und 180 m²/g, bevorzugt zwischen 20 m²/g und 180 m²/g, weiter bevorzugt zwischen 35 m²/g und 150 oder 180 m²/g, insbesondere bevorzugt zwischen 40 m²/g und 120 oder 180 m²/g auf.

Vorteilhaft weicht die BET-Oberfläche des vorliegenden stabilisierten Lignins nur um maximal 20%, bevorzugt um maximal 15%, weiter bevorzugt um maximal 10% von der STSA-Oberfläche ab. Die BET-Oberfläche wird als Gesamtoberfläche aus äußerer und innerer Oberfläche mittels Stickstoff-Adsorption nach Brunauer, Emmett und Teller ermittelt.

Des Weiteren beträgt die BET- und STSA-Oberfläche nach dem Erhitzen der getrockneten Ligninpartikel in Schritt d) zum Ende der zweiten Prozessstufe im Vergleich zum Zeitpunkt vor dem Erhitzen der getrockneten Ligninpartikel in der zweiten Prozessstufe bevorzugt mindestens 30%, weiter bevorzugt mindestens 40%, besonders bevorzugt mindestens 50%

Bevorzugt sind die durch das erfindungsgemäße Verfahren hergestellten stabilisierten Ligninpartikel wenig porös. Vorteilhaft liegt das Porenvolumen der stabilisierten Ligninpartikel bei < 0,1 cm³/g, weiter bevorzugt bei < 0,01 cm³/g, besonders bevorzugt bei < 0,005 cm³/g. Hiermit unterscheidet sich das vorliegende stabilisierte Lignin von feinteiligen porösen Materialien wie zum Beispiel gemahlener biogener Pulveraktivkohle, die neben einer BET-Oberfläche von in der Regel mehr als 500 m²/g auch eine STSA-Oberfläche von maximal 10 m²/g aufweisen kann.

Die stabilisierten Ligninpartikel gemäß der Erfindung unterscheiden sich bevorzugt durch die bevorzugten vorteilhaften Partikeleigenschaften, zum Beispiel dem d50 der Korngrößenverteilung von weniger als 500 μm oder der STSA von mehr als 10 m²/g bevorzugt mehr als 20 m²/g von Lignin-basierten Harzen, die durch eine Reaktion mit Formaldehyd erzeugt wurden und von der Lösung über den Gel-Zustand in ein Duromer umgewandelt werden.

Die Bestimmung der BET-Oberfläche und der STSA-Oberfläche erfolgt entsprechend der Norm ASTM D 6556-14. In der vorliegenden Erfindung erfolgt abweichend von dieser die Probenvorbereitung/Ausgasung für die STSA- und BET-Messung bei 150°C.

Bevorzugt sind die erfindungsgemäß erhaltenen stabilisierten Ligninpartikel nur bedingt in alkalischen Flüssigkeiten löslich. Bevorzugt liegt die Löslichkeit des stabilisierten Lignins bei weniger als 30%, besonders bevorzugt bei weniger als 25%, ganz besonders bevorzugt bei weniger als 20%, noch bevorzugter bei weniger als 15%, noch bevorzugter bei weniger als 10%, ferner bevorzugt bei weniger als 7,5%, noch bevorzugter bei weniger als 5%, noch bevorzugter von weniger als 2,5%,insbesondere bevorzugt bei weniger als 1%.

Die alkalische Löslichkeit des stabilisierten Lignins wird dabei wie folgt bestimmt:

1. Zur Bestimmung der Löslichkeit einer Feststoff-Probe muss diese in trockener fein-pulvriger Form vorliegen (TS>98%). Ist dies nicht gegeben, so wird die trockene Probe vor Bestimmung der Löslichkeit gemahlen oder gründlich gemörsert.

2. Die Ermittlung der Löslichkeit erfolgt in Dreifachbestimmung. Hierzu werden je 2,0 g trockener Füllstoff in je 20 g 0,1 M NaOH eingewogen. Beträgt der ermittelte pH-Wert der Probe jedoch <10, so wird diese Probe verworfen und es wird stattdessen 2,0 g trockener Füllstoff in je 20 g 0,2 M NaOH eingewogen. In Abhängigkeit vom pH-Wert (<10 oder ≥10) wird also entweder 0,1 M NaOH verwendet (pH ≥10) oder 0,2 M NaOH (pH <10).

3. Die alkalische Suspension wird bei Raumtemperatur für 2 Stunden geschüttelt bei einer Schüttlerzahl von 200 pro Minute. Sollte die Flüssigkeit dabei den Deckel berühren, so ist die Schüttlerzahl soweit zu erniedrigen, dass dies nicht passiert.

4. Die alkalische Suspension wird anschließend mit 6000 x g zentrifugiert.

5. Der Überstand der Zentrifugation wird über eine Por 4 Fritte filtriert.

6. Der Feststoff nach Zentrifugation wird zweimal mit destilliertem Wasser durch Wiederholung von 4. bis 6. gewaschen.

7. Der Feststoff wird für mindestens 24h bei 105 °C im Trockenofen bis zur Gewichtskonstanz getrocknet.

8. Die alkalische Löslichkeit des Lignin-reichen Feststoffes wird wie folgt berechnet:

Alkalische Löslichkeit Lignin-reicher Feststoff [%] = Masse des ungelösten Anteils nach Zentrifugation, Filtration und Trocknung [g] * 100 / Masse des im Punkt 2 erhaltenen Produkts [g]

Die Erfindung betrifft auch stabilisierte Ligninpartikel, erhältlich nach dem erfindungsgemäßen Verfahren wie vorstehend beschrieben, wobei die stabilisierten Ligninpartikel

einen d50-Wert der Korngrößenverteilung, bezogen auf das Volumenmittel, von weniger als 500 $\mu$m, bevorzugt weniger als 50 $\mu$m, noch bevorzugter weniger als 20 $\mu$m aufweisen, und/oder

eine STSA-Oberfläche im Bereich von 2 m$^2$/g bis 180 m$^2$/g, bevorzugt von 10 m$^2$/g bis 150 oder 180 m$^2$/g, bevorzugter 40 m$^2$/g bis 120 oder 180 m$^2$/g aufweisen.

Erfindungsgemäß sind auch stabilisierte Ligninpartikel mit einer oder mehreren der folgenden Eigenschaften, wobei die Partikel bevorzugt erhältlich sind nach dem erfindungsgemäßen Verfahren wie vorstehend beschrieben:

- einer STSA von mindestens 2 m$^2$/g, bevorzugt von 10 m$^2$/g, weiter bevorzugt mindestens 20 m$^2$/g, noch weiter bevorzugt mindestens 40 m$^2$/g. Bevorzugt liegt die STSA bei weniger als 180 m$^2$/g, bevorzugter weniger als 150 m$^2$/g, noch bevorzugter weniger als 120 m$^2$/g
- einem Signal im Festkörper $^{13}$C-NMR bei 0 bis 50 ppm, bevorzugt bei 10 bis 40 ppm besonders bevorzugt bei 25 bis 35 ppm mit einer Intensität im Vergleich zum Signal der Methoxygruppen bei 54 bis 58 ppm von 1-80%, bevorzugt 5-60%, insbesondere bevorzugt 5-50% und einem $^{13}$C-NMR Signal bei 125 bis 135 ppm, bevorzugt bei 127 bis 133 ppm, das gegenüber dem eingesetzten Lignin erhöht ist
- einem $^{14}$C-Gehalt, bevorzugt größer als 0,20Bq/g Kohlenstoff, insbesondere bevorzugt größer als 0,23Bq/g Kohlenstoff, bevorzugt jedoch kleiner als 0,45Bq/g Kohlenstoff, bevorzugt kleiner als 0,4Bq/g Kohlenstoff, besonders bevorzugt kleiner als 0,35Bq/g Kohlenstoff
- einen Kohlenstoffgehalt bezogen auf die aschefreie Trockensubstanz zwischen 60 Massen-% und 80 Massen-%, bevorzugt zwischen 65 Massen-% und 75 Massen-%
- einer Glasübergangstemperatur von mehr als 160°C, weiter bevorzugt von mehr als 180°C, besonders bevorzugt von mehr als 200°C, insbesondere von mehr als 250°C. Bevorzugt kann bei den stabilisierten Ligninpartikeln keine Glasübergangstemperatur gemessen werden.
- einem Porenvolumen der stabilisierten Ligninpartikel von kleiner 0,1 cm$^3$/g, weiter bevorzugt kleiner 0,01 cm$^3$/g, besonders bevorzugt kleiner 0,005 cm$^3$/g.
- einen Anteil an flüchtigen Bestandteilen nach DIN 51720 von mehr als 5%, bevorzugt von mehr als 10%, besonders bevorzugt von mehr als 15%, darüber hinaus bevorzugt von mehr als 20%, darüber hinaus besonders bevorzugt von mehr als 25%, insbesondere darüber hinaus bevorzugt von mehr als 30%, insbesondere von mehr als 35%.
- einen Anteil an flüchtigen Bestandteilen nach DIN 51720 von weniger als 60%, bevorzugt von weniger als 55%, besonders bevorzugt von weniger als 50%.
- Eine alkalische Löslichkeit von weniger als 30%, bevorzugt von weniger als 25%, besonders bevorzugt von weniger als 20%, darüber hinaus bevorzugt von weniger als 15%, darüber hinaus besonders bevorzugt von weniger als 10%, insbesondere von weniger als 5%,
- eine alkalische Löslichkeit von mehr als 0,5%, bevorzugt von mehr als 1%, darüber hinaus bevorzugt von mehr als 2,5% oder von weniger als 30%, besonders bevorzugt weniger als 25%, ganz besonders bevorzugt weniger als 20%, noch bevorzugter weniger als 15%, noch bevorzugter weniger als 10%, noch bevorzugter weniger als 5%, insbesondere bevorzugt weniger als 1%.
- einen Sauerstoffgehalt in einem Bereich von >8 Gew.-% bis <30 Gew.-%, vorzugsweise von >10 Gew.-% bis <30 Gew.-%, besonders bevorzugt von >15 Gew.-% bis <30 Gew.-%, ganz besonders bevorzugt von >20 Gew.-% bis <30 Gew.-%, aufweist, jeweils bezogen auf die aschefreie Trockensubstanz.
- ein Gehalt an Syringyl-Bausteinen vorzugsweise in einem Bereich kleiner als 5,0%, besonders bevorzugt kleiner als 4,0%, wobei % Gew.-% darstellen und auf das Gesamtgewicht der Ligninpartikel bezogen sind,
- einen pH Wert von mindestens 6, bevorzugt mindestens 7, weiter bevorzugt mindestens 7,5 und maximal 10, bevorzugt maximal 9, weiter bevorzugt maximal 8,5.

Vorzugsweise weisen die stabilisierten Ligninpartikel einen Anteil an in einem alkalischen Medium löslichen Verbindungen von weniger als 30%, bevorzugt von weniger als 25%, besonders bevorzugt von weniger als 20%, darüber hinaus bevorzugt von weniger als 15%, darüber hinaus besonders bevorzugt von weniger als 10%, insbesondere von weniger als 5%, am meisten bevorzugt von weniger als 1%,auf, jeweils bezogen auf das Gesamtgewicht der Partikel, wobei das alkalische Medium eine wässrige Lösung von NaOH (0,1 Mol/l oder 0,2 Mol/l), darstellt und der Anteil bestimmt wird gemäß vorstehend beschriebener Methode. Mit % sind hier Gew.-% gemeint.

Vorzugsweise weisen die stabilisierten Ligninpartikel einen Anteil an aus ihnen ausgasbaren organischen Verbindungen (Emissionen) aufweisen, bestimmt gemäß Thermodesorptionsanalyse nach VDA 278 (05/2016), der bei <200 $\mu$g/g Ligninpartikel, besonders bevorzugt bei <175 $\mu$g/g Ligninpartikel, ganz besonders bevorzugt bei <150 $\mu$g/g Ligninpartikel, darüber hinaus bevorzugt bei <100 $\mu$g/g Ligninpartikel, besonders bevorzugt bei <50 $\mu$g/g Ligninpartikel in einigen Fällen bei <25 $\mu$g/g Ligninpartikel liegt.

Beispiele solcher ausgasbarer organischer Verbindungen sind Vanillin, Ethanol und 4-Hydroxy-3-methoxyacetophenon. Bevorzugt liegt der Gehalt an den ausgasbaren Einzelkomponenten Vanillin, Ethanol oder 4-Hydroxy-3-methoxyacetophenon bei mehr als 1 $\mu$g/g, bevorzugt bei mehr als 2 $\mu$/g.

Bevorzugt weisen die stabilisierten Ligninpartikel einen Anteil der ausgasbaren Einzelkomponenten

- 2-Methoxyphenol
- Phenol
- Guajacol
- 4-Methoxy-3-methyl-phenol
- 4-Propanolguajacol
- Apocynin
- 2-Methoxy-4-methylphenol
- 2-Methoxy-4-ethylphenol
- 4-Propylguajacol
- Dimethyl trisulfide
- Methanol
- Ethanol
- Syringol
- Vanillin
- 1,2-Dimethoxybenzol
- Hydroxy-Dimethoxyethanon und/oder
- Coniferylaldehyd

jeweils bestimmt gemäß Thermodesorptionsanalyse nach VDA 278 (05/2016), von weniger als 50 $\mu$g/g Ligninpartikel, bevorzugt von 25 $\mu$g/g Ligninpartikel, besonders bevorzugt von weniger als 15 $\mu$g/g Ligninpartikel, darüber hinaus bevorzugt von weniger als 10 $\mu$g/g Ligninpartikel, insbesondere bevorzugt von weniger als 5 $\mu$g/g Ligninpartikel, in einigen Fällen von weniger als 1 $\mu$g/g Ligninpartikel auf.

Vorzugsweise weisen die stabilisierten Ligninpartikel einen $^{14}$C-Gehalt auf, der größer als 0,20 Bq/g Kohlenstoff, insbesondere bevorzugt größer als 0,23 Bq/g Kohlenstoff, bevorzugt jedoch kleiner als 0,45 Bq/g Kohlenstoff, noch bevorzugter kleiner als 0,4 Bq/g Kohlenstoff, besonders bevorzugt kleiner als 0,35Bq/g Kohlenstoff ist, und/oder weisen einen Kohlenstoffgehalt bezogen auf die aschefreie Trockensubstanz zwischen 60 Massen-% und 80 Massen-%, bevorzugt zwischen 65 Massen-% und 75 Massen-% auf.

Die Erfindung betrifft in einem weiteren Gegenstand zudem Ligninpartikel, wobei die Ligninpartikel

einen d50-Wert der Korngrößenverteilung, bezogen auf das Volumenmittel, von weniger als 500 $\mu$m, bevorzugt weniger als 50 $\mu$m, noch bevorzugter von weniger als 20 $\mu$m, aufweisen, und/oder

eine STSA-Oberfläche im Bereich von 2 m[2]/g bis 180 m[2]/g, bevorzugt 10 m[2]/g bis 180 m[2]/g, bevorzugt von 20 m[2]/g bis 180 m[2]/g, weiter bevorzugt von 35 m[2]/g bis 150 oder 180 m[2]/g, insbesondere bevorzugt von 40 m[2]/g bis 120 oder 180 m[2]/g aufweisen,

wobei die Partikel einen Anteil an in einem alkalischen Medium löslichen Verbindungen von weniger als 30%, bevorzugt von weniger als 25%, besonders bevorzugt von weniger als 20%, darüber hinaus bevorzugt von weniger als 15%, darüber hinaus besonders bevorzugt von weniger als 10%, ferner bevorzugt von weniger als 7,5%, insbesondere von weniger als 5% aufweisen, am meisten bevorzugt von weniger als 2,5% oder von weniger als 1%, jeweils bezogen auf das Gesamtgewicht der Partikel, wobei das alkalische Medium eine wässrige Lösung von NaOH (0,1 Mol/l oder 0,2 Mol/l) darstellt und der Anteil bestimmt wird gemäß der in der Beschreibung beschriebenen Methode und/oder die Partikel einen Anteil an aus ihnen ausgasbaren organischen Verbindungen (Emissionen) aufweisen, bestimmt gemäß Thermodesorptionsanalyse nach VDA 278 (05/2016), der bei <200 $\mu$g/g Ligninpartikel, besonders bevorzugt bei <175 $\mu$g/g Ligninpartikel, ganz besonders bevorzugt bei <150 $\mu$g/g Ligninpartikel, darüber

hinaus bevorzugt bei <100 $\mu$g/g Ligninpartikel, besonders bevorzugt bei <50 $\mu$g/g Ligninpartikel in einigen Fällen bei <25 $\mu$g/g Ligninpartikel, liegt.

Vorzugsweise weisen diese Ligninpartikel einen $^{14}$C-Gehalt auf, der größer als 0,20 Bq/g Kohlenstoff, insbesondere bevorzugt größer als 0,23 Bq/g Kohlenstoff, bevorzugt jedoch kleiner als 0,45 Bq/g Kohlenstoff, noch bevorzugter kleiner als 0,4 Bq/g Kohlenstoff, besonders bevorzugt kleiner als 0,35 Bq/g Kohlenstoff ist, und/oder weisen einen Kohlenstoffgehalt bezogen auf die aschefreie Trockensubstanz zwischen 60 Massen-% und 80 Massen-%, bevorzugt zwischen 65 Massen-% und 75 Massen-% auf.

Ein weiterer Gegenstand der vorliegenden Erfindung ist eine Verwendung der Ligninpartikel als Füllstoff, insbesondere in Kautschukzusammensetzungen.

Ein weiterer Gegenstand der vorliegenden Erfindung ist eine Kautschukzusammensetzung umfassend wenigstens eine Kautschukkomponente und wenigstens eine Füllstoffkomponente, wobei die Füllstoffkomponente erfindungsgemäße Ligninpartikel als Füllstoff enthält, wobei die Kautschukzusammensetzung vorzugsweise vulkanisierbar ist.

Die Kautschukzusammensetzung kann dabei zudem wenigstens ein Vulkanisationssystem enthalten, welches wenigstens einen Vernetzter umfasst. Beispiele solcher Vernetzer sind Schwefel und/oder Peroxide.

Die erfindungsgemäßen Ligninpartikel können in der Kautschukzusammensetzung, z.B. in einer Menge von 10 Gew.-% bis 150 Gew.-%, bevorzugt 20 Gew.-% bis 120 Gew.-%, bevorzugter 40 Gew.-% bis 100 Gew.-%, besonders bevorzugt 50 Gew.-% bis 80 Gew.-%, bezogen auf das Gewicht des eingesetzten Kautschuks für die Kautschukzusammensetzung, eingesetzt werden.

Durch Vernetzung wird aus der Kautschukzusammensetzung ein Gummiartikel, insbesondere technische Gummiartikel oder Reifen erhalten. Gummiartikel sind Artikel, die auf Gummi bzw. ein Kautschuk-Elastomer, d.h. vernetzten Kautschuk, basieren, der als Matrixmaterial für den Artikel dient. Gummiartikel, insbesondere technische Gummiartikel oder Reifen, werden manchmal auch als Gummiwaren, Kautschukartikel oder Kautschukwaren bezeichnet. Der englische Fachbegriff für technische Gummiartikel ist "Mechanical Rubber Goods" (Abkürzung MRG). Beispiele für Gummiartikel, insbesondere technische Gummiartikel oder Reifen, sind Fahrzeugreifen, Dichtprofile, Riemen, Gurte, Förderbänder, Schläuche, Federelemente, Gummi-Metallteile, Walzenbeläge, Formartikel, Dichtungen und Kabel.

Der Gummiartikel, insbesondere der technische Gummiartikel oder Reifen, kann in einer bevorzugten Ausführungsform weitere Füllstoffe enthalten, insbesondere Ruß und/oder Kieselsäure und/oder andere anorganische bzw. oberflächenbehandelte anorganische Füllstoffe wie z.B. Kreide und Kieselerde.

Bevorzugt sind Gummiartikel, bevorzugt Profile, Kabel oder Dichtungen, die die erfindungsgemäßen Ligninpartikel mit einem Anteil von mindestens 10 Gew.-%, bevorzugt mindestens 20 Gew.-%, darüber hinaus bevorzugt mindestens 30 Gew.-% enthalten und einen Anteil an aus ihm ausgasbaren organischen Verbindungen (Emissionen) aufweisen, bestimmt gemäß Thermodesorptionsanalyse nach VDA 278 (05/2016), der bei <200 $\mu$g/g Gummiartikel, besonders bevorzugt bei <175 $\mu$g/g Gummiartikel, ganz besonders bevorzugt bei <150 $\mu$g/g Gummiartikel darüber hinaus bevorzugt bei <100 $\mu$g/g Gummiartikel, insbesondere bevorzugt bei <50 $\mu$g/g Gummiartikel in einzelnen Fällen bei <25 $\mu$g/g Gummiartikel liegt.

Bevorzugt sind Gummiartikel, die das erfindungsgemäße Lignin mit einem Anteil von mindestens 10 Gew.-%, bevorzugt mindestens 20 Gew.-%, darüber hinaus bevorzugt mindestens 30 Gew.-% enthalten, insbesondere bevorzugt mindestens 40 Gew.-% enthalten und eine Quellung gemessen nach DIN ISO 1817:2015 in 0,1 mol NaOH von maximal 30%, bevorzugt maximal 25%, weiter bevorzugt maximal 20%, darüber hinaus bevorzugt maximal 15%, insbesondere maximal 10%, in einzelnen Fällen maximal 5%, aufweisen.

**Bestimmungsmethoden:**

1. Bestimmung der BET- und STSA-Oberfläche

Die spezifische Oberfläche des zu untersuchenden Produkts wurde gemäß der für Industrieruße (Carbon Black) vorgesehenen Norm ASTM D 6556 (2019-01-01) durch Stickstoffadsorption bestimmt. Nach dieser Norm wurde zudem die BET-Oberfläche (spezifische Gesamtoberfläche nach Brunauer, Emmett und Teller) sowie die externe Oberfläche (STSA-Oberfläche; Statistical Thickness Surface Area) wie folgt bestimmt.

Die zu analysierende Probe wurde vor der Messung auf einen Trockensubstanz-Gehalt $\geq$ 97,5 Gew.-% bei 105 °C getrocknet. Zudem wurde die Messzelle vor Einwiegen der Probe für mehrere Stunden im Trockenofen bei 105 °C getrocknet. Die Probe wurde anschließend unter Verwendung eines Trichters in die Messzelle eingefüllt. Bei Verunreinigung des oberen Messzellenschafts während des Befüllens wurde dieser mittels einer geeigneten Bürste oder einem Pfeifenreiniger gesäubert. Bei stark fliegendem (elektrostatischem) Material wurde zusätzlich zur Probe Glaswolle eingewogen. Die Glaswolle diente dazu, während des Ausheizvorganges eventuell auffliegendes Material, welches das Gerät verschmutzen könnte, zurückzuhalten.

Die zu analysierende Probe wurde bei 150 °C für 2 Stunden ausgeheizt, der $Al_2O_3$-Standard bei 350 °C für 1 Stunde. Für die Bestimmung wurde in Abhängigkeit vom Druckbereich folgende $N_2$-Dosierung verwendet:

p/p0 = 0 - 0,01: $N_2$-Dosierung: 5ml/g
p/p0 = 0,01 - 0,5: $N_2$-Dosierung: 4ml/g.

Zur Bestimmung der BET wurde im Bereich von p/p0 = 0,05 - 0,3 mit mind. 6 Messpunkten extrapoliert. Zur Bestimmung der STSA wurde im Bereich der Schichtdicke des adsorbierten $N_2$ von t = 0,4 - 0,63 nm (entspricht p/p0 = 0,2 - 0,5) mit mind. 7 Messpunkten extrapoliert.

## 2. Bestimmung der Korngrößenverteilung

Die Korngrößenverteilung wird mittels Laserbeugung des in Wasser dispergierten Materials (1 Gew.-% in Wasser) nach ISO 13320:2009 bestimmt. Die Angabe des Volumenanteils erfolgt z.B. als d99 in $\mu$m (Durchmesser der Körner von 99% des Volumens der Probe liegt unter diesem Wert).

## 3. Bestimmung des $^{14}$C-Gehalts

Die Bestimmung des $^{14}$C-Gehalts (Gehalt an biobasiertem Kohlenstoff) erfolgt mittels der Radiokarbonmethode gemäß DIN EN 16640:2017-08.

## 4. Bestimmung des Kohlenstoffgehalts

Der Kohlenstoffgehalt wird durch Elementaranalyse gemäß DIN 51732: 2014-7 bestimmt.

## 5. Bestimmung des Sauerstoffgehalts

Der Sauerstoffgehalt wird durch Hochtemperaturpyrolyse mit Hilfe des EuroEA3000 CHNS-O Analyzers der Firma EuroVector S.p.A. ermittelt.

## 6. Bestimmung des pH-Werts

Die Bestimmung des pH-Wertes erfolgte in Anlehnung an die Norm ASTM D 1512 wie folgt. Die trockene Probe wurde, soweit nicht schon als Pulver vorliegend, zu einem Pulver gemörsert bzw. gemahlen. Jeweils 5 g Probe und 50 g vollentionisiertes Wasser wurden in einem Becherglas eingewogen. Die Suspension wurde unter ständigem Rühren mittels eines Magnetrührers mit Heizfunktion und Rührfisch auf eine Temperatur von 60°C erhitzt und die Temperatur für 30 min bei 60 °C gehalten. Anschließend wurde die Heizfunktion des Rührers deaktiviert, so dass der Ansatz unter Rühren abkühlen konnte. Nach dem Abkühlen wurde das verdunstete Wasser durch erneute Zugabe von vollentionisiertem Wasser aufgefüllt und erneut für 5 min gerührt. Mit einem geeichten Messgerät wurde der pH-Wert der Suspension ermittelt. Die Temperatur der Suspension sollte 23°C ($\pm$ 0,5 °C) betragen. Für jede Probe wurde eine Doppelbestimmung durchgeführt und der gemittelte Wert angegeben.

## 7. Bestimmung des Aschegehalts

Der wasserfreie Aschegehalt der Proben wurde gemäß der Norm DIN 51719 durch thermogravimetrische Analyse wie folgt bestimmt: Vor dem Einwiegen wurde die Probe gemahlen oder gemörsert. Vor der Aschebestimmung wird der Trockensubstanz-Gehalt des eingewogenen Materials ermittelt. Das Probenmaterial wurde auf 0,1 mg genau in einem Tiegel eingewogen. Der Ofen wurde samt Probe mit einer Aufheizrate von 9 ° K/min auf eine Zieltemperatur von 815 °C aufgeheizt und anschließend für 2 h bei dieser Temperatur gehalten. Anschließend wurde der Ofen auf 300 °C abgekühlt bevor die Proben entnommen wurden. Die Proben wurden im Exsikkator bis auf Umgebungstemperatur abgekühlt und erneut gewogen. Die verbliebene Asche wurde in Bezug zur Einwaage gesetzt und so der gewichtsprozentuale Gehalt an Asche bestimmt. Für jede Probe wurde eine Dreifachbestimmung durchgeführt und der gemittelte Wert angegeben.

## 8. Bestimmung der Löslichkeit in alkalischen Medien

Die Bestimmung der Alkalilöslichkeit erfolgt gemäß der vorstehend in der Beschreibung beschriebenen Methode.

**9**. Bestimmung der Emissionsmenge

Der Gehalt an ausgasbaren organischen Verbindungen (Emissionen) wird bestimmt gemäß Thermodesorptionsanalyse nach VDA 278 (05/2016). Die ausgasbaren organischen Gesamtemissionen werden als Summe der Messwerte aus dem VOC und dem FOG Lauf angegeben. Die Konzentration der Einzelkomponenten wird durch Zuordnung der Signalpeaks anhand der Massenspektren und Retentionsindizes ermittelt. Die organischen Emissionen der Ligninpartikel bzw. der stabilisierten Ligninpartikel werden an den Partikeln selbst ermittelt. Die organischen Emissionen der Gummiartikel, die die Ligninpartikel enthalten werden an den Gummiartikel selbst ermittelt. Bei den ausgasbaren organischen Gesamtemissionen der Gummiartikel werden nur die organischen Komponenten berücksichtigt. Die ermittelten Emissionen, die aus nicht organischen Bestandteilen der vernetzten Kautschukzusammensetzung resultieren, bleiben unberücksichtigt.

**10**. Bestimmung der elektrischen Leitfähigkeit

Die Bestimmung der Leitfähigkeit erfolgte in Anlehnung an die Norm ISO 787-14 wie folgt. Die trockene Probe wurde, soweit nicht schon als Pulver vorliegend, zu einem Pulver gemörsert bzw. gemahlen. Jeweils 5 g Probe und 50 g vollentionisiertes Wasser wurden in einem Becherglas eingewogen. Die Suspension wurde unter ständigem Rühren mittels eines Magnetrührers mit Heizfunktion und Rührfisch auf eine Temperatur von 60°C erhitzt und die Temperatur für 30 min bei 60 °C gehalten. Anschließend wurde die Heizfunktion des Rührers deaktiviert, so dass der Ansatz unter Rühren abkühlen konnte. Nach dem Abkühlen wurde das verdunstete Wasser durch erneute Zugabe von vollentionisiertem Wasser aufgefüllt und erneut für 5 min gerührt. Die Suspension unter Benutzung von Filterpapier 3-5$\mu$m über einen Büchnertrichter im Unterdruck filtrieren. Hierzu ist zum Auffangen des Filtratwassers eine Saugflasche zu verwenden. Mit einem geeichten Leitfähigkeitsmessgerät wird die Leitfähigkeit des Filtratwassers ermittelt. Die Temperatur sollte 23°C ($\pm$0,5°C) betragen. Die Leitfähigkeit des Filtratwassers ist in [$\mu$Scm-1] anzugeben.

**11.** Bestimmung des Glasübergangstemperatur

Die Messung der Glasübergangstemperatur erfolgt nach DIN 53765.

**12.** Bestimmung der Löslichkeit in Ethanol

Zur Bestimmung der Löslichkeit einer Feststoff-Probe in Ethanol wird eine Probe mit einem Gehalt an Trockensubstanz von >98% eingesetzt. Ist dies nicht gegeben, so wird die Probe vor Bestimmung der Löslichkeit zunächst gemahlen oder gründlich gemörsert und auf der Feuchtewaage oder im Trockenschrank getrocknet. Bei Trocknung im Trockenschrank ist zusätzlich der Trockensubtanz-Gehalt zu bestimmen, der bei der Berechnung der Löslichkeit dann zu berücksichtigen ist Die Zellstoff-Hülse wird zu ca. 2/3 mit der Probemenge gefüllt mindestens 3 g, wobei die Einwaage auf der Analysenwaage mit 0,1 mg Genauigkeit zu erfolgen hat. Die Probe wird dann unter Rückfluss mit 250 mL Ethanol-WasserGemisch (Gewichtsverhältnis 1:1) unter Verwendung von Siedesteinen extrahiert, bis der Rückfluss nahezu farblos ist (ca. 24 h). Die Hülse wird zunächst im Abzug (1h) und dann für 24h im Trockenschrank bis zur Gewichtskonstanz getrocknet und anschließend gewogen. Die Löslichkeit in Ethanol kann dann wie folgt berechnet werden:

Ethanolische Löslichkeit Lignin-reicher Feststoff [%] = Masse des ungelösten Anteils nach Zentrifugation, Filtration und Trocknung [g] * 100 / Einwaage [g].

**13.** Bestimmung der Löslichkeit in Dimethylformamid

Die Löslichkeit in Dimethylformamid (DMF) wird per 3-fach-Bestimmung ermittelt. Zunächst werden vorbereitend je 1x Filterpapier Ø= 55mm mit passendem Büchnertrichter (BT) getrocknet und das jeweilige Leergewicht (auf 0,1 mg genau) im Löslichkeitsprotokoll dokumentiert. Es werden je 2 g trockene Probe in je 40 g DMF in einen 100ml Erlenmeyerkolben eingewogen. Die Suspension wird für 2 Stunden auf einem Überkopfrotator bei mittlerer Geschwindigkeit in Bewegung gehalten und anschließend 15min zentrifugiert. Der abdekantierte Überstand wird nach Anfeuchten des Filterpapiers über den vorbereiteten Büchnertrichter filtriert. Nach vollständiger Filtration ist der pH-Wert des Filtrats zu überprüfen und zu notieren. Anschließend folgen zwei Wäschen mit je ca. 30 ml entionisiertem Wasser mit anschließender Zentrifugation und Filtration des Überstands über den Büchnertrichter, um den Filterkuchen von löslichem DMF zu reinigen. Abschließend werden Zentrifugenröhrchen & Büchnertrichter mitsamt Filterpapier im Trockenschrank 24 h getrocknet. Die Löslichkeit in DMF kann dann wie folgt berechnet werden:

Löslichkeit des Lignin-reichen Feststoffs in DMF [%] = Masse des ungelösten

Anteils nach Zentrifugation, Filtration und Trocknung [g] * 100 / Einwaage [g]

**14.** Bestimmung des Gehaltes an Svrinavl-Bausteinen

Der Gehalt an Syringyl-Bausteinen wurde mittels Pyrolyse-GC/MS ermittelt. Ca. 300 μg der Probe wurde mit einem Pyrolyseofen EGA/ Py 3030D (Frontier Lab) bei 450°C pyrolysiert. Die Trennung der Komponenten erfolgte mittels Gaschromatograph GC 7890D (Agilent technologies) auf einer ZB-5MS Säule (30 m x 0.25 mm) mit einem Temperaturprogramm von 50°C bis 240°C mit einer Heizrate von 4 K/min und eine weitere Aufheizung auf 300°C mit einer Heizrate von 39 K/min mit einer Haltezeit von 15 min. Die Zuordnung der Substanz erfolgte über die Massenspektralbibliotheken 5977 MSD (SIM) sowie NIST 2014.

Die vorliegende Erfindung wird im Folgenden anhand von Ausführungsbeispielen näher erläutert.

**Ausführungsbeispiele**

In den folgenden Beispielen wird statt der STSA die BET angegeben. BET und STSA weichen für die hier erzeugten stabilisierten Ligninpartikel jedoch nicht mehr als 10% voneinander ab.

**Beispiel 1** - **Stabilisierung durch Wärmebehandlung in Schritt d)**

Rohstoff für dieses Beispiel ist LignoBoost Lignin (BioPiva) gewonnen aus einer Schwarzlauge aus einem Kraft-Aufschluss. Der Feststoff wird zunächst in destilliertem Wasser suspendiert. Durch Zugabe von fester Natronlauge wird ein pH-Wert von etwa 10 eingestellt. Weiterhin wird die Zugabe von Wasser so gewählt, dass ein bestimmte Trockenstoffgehalt erreicht wird. Zur Herstellung des in einer Flüssigkeit gelösten Lignins wird die Mischung bei einer Temperatur für eine bestimmte Zeit gerührt, wobei darauf geachtet wird, dass etwaig verdampftes Wasser durch Zugabe ausgeglichen wird.

| Versuchsname | Menge Lignin [g] | Menge und Typ Lösungsadditiv | Menge und Typ Flüssigkeit | Temperatur [°C] | Zeit [min] |
|---|---|---|---|---|---|
| Lösung 1 | 100 | 9 g / NaOH | 420,3 g / Destilliertes Wasser | 80 | 180 |
| Lösung 2 | 200 | 18 g / NaOH | 944 g / Destilliertes Wasser | 80 | 180 |
| Lösung 3 | 1000 | 90 g / NaOH | 4000 g / Destilliertes Wasser | 80 | 180 |
| Lösung 4 | 381 | 27 g / NaOH | 1500 g / Destilliertes Wasser | 80 | 180 |

Das eingesetzte Lignin hat 1,15 mmol/g phenolische Guajacylgruppen und 0,05 mmol/g p-Hydroxyphenylgruppen und damit 1,25 mmol/g vernetzbare Einheiten.

Das in der Flüssigkeit gelöste Lignin wird nun in der ersten Prozessstufe mit einem Vernetzer zu Reaktion gebracht. Das als Vernetzer zur Modifizierung des Lignins eingesetzte Formaldehyd hat 66,6 mmol vernetzbare Einheiten / g trockenes Formaldehyd. Die Reaktion findet in einem Glaskolben statt. Der Vernetzer wird zugegeben, ein Rührwerk sorgt für die nötige Durchmischung. Ein Wasserbad dient der Wärmezufuhr. Nachdem eine Temperatur von 5 °C unter der Reaktionstemperatur durchschritten wird beginnt die Haltezeit. Nach Ablauf der Haltezeit wird das Wasserbad entfernt und die Reaktionslösung für eine weitere Stunde gerührt.

| Versuchsname | Ligninhaltiger Rohstoff | Menge Vernetzer [g] | Typ Vernetzer | Temperatur [°C] | Zeit [min] |
|---|---|---|---|---|---|
| PS1 Modifikation 1 | Lösung 1 | 6,2 | Formaldehyd | 95 | 180 |
| PS1 Modifikation 2 | Lösung 2 | 12,6 | Formaldehyd | 95 | 240 |

(fortgesetzt)

| Versuchsname | Ligninhaltiger Rohstoff | Menge Vernetzer [g] | Typ Vernetzer | Temperatur [°C] | Zeit [min] |
|---|---|---|---|---|---|
| PS1 Modifikation 3* | 600 g Lösung 3 | - | - | 95 | 240 |
| PS1 Modifikation 4 | 1000 g Lösung 4 | 12,6 | Formaldehyd | 95 | 240 |
| * nicht erfindungsgemäß | | | | | |

Die in der ersten Prozessstufe hergestellte Mischung wird anschließend in die zweite Prozessstufe eingebracht.

In der zweiten Prozessstufe erfolgt zunächst die Herstellung der Partikel in Beisein einer Flüssigkeit und Zugabe von Fällungsmittel und Fälladditiv.

| Versuchsname | Mischung umfassend gelöstes modifizier es Lignin aus der ersten Stufe | Flüssigkeitsmenge und Typ | Fälladditiv Menge und Typ | Fällungsmittel Menge und Typ | Temperatur [°C] |
|---|---|---|---|---|---|
| PS2 Partikelbildung 1 | 50g PS1 Modifikation 1 | 50 g Wasser | 100 g Aceton | 120 ml 0,05 M $H_2SO_4$ | 20-25 |
| PS2 Partikelbildung 2 | 1100 g PS1 Modifikation 2 | 1100 g Wasser | 2214 g Aceton | 3400 ml 0,05 M $H_2SO_4$ | 20-25 |
| PS2 Partikelbildung 3* | 600 g PS1 Modifikation 3 | - | 300 g Aceton | 900 ml 0,1 M $H_2SO_4$ | 20 - 25 |
| PS2 Partikelbildung 4 | 1019 g PS1 Modifikation 4 | 1004 g Wasser | 2011 g Aceton | 1380 ml 0,1 M $H_2SO_4$; 300 ml 0,05 M $H_2SO_4$ | 20 - 25 |
| * nicht erfindungsgemäß | | | | | |

Die Abtrennung der Flüssigkeit von den Partikeln erfolgt zunächst durch Zentrifugation. Anschließend werden die nach der Zentrifugation noch feuchten Partikel getrocknet.

PS2 Wasserabtrennung 3 fand ausschließlich thermisch statt.

| Versuchsname | Partikel aus | Trocknungstemperatur [°C] |
|---|---|---|
| PS2 Wasserabtrennung 1 | PS2 Partikelbildung 1 | 105 |
| PS2 Wasserabtrennung 2 | PS2 Partikelbildung 2 | 105 |
| PS2 Wasserabtrennung 3* | PS2 Partikelbildung 3 | 105 |
| PS2 Wasserabtrennung 4 | PS2 Partikelbildung 4 | 105 |
| PS2 Wasserabtrennung 5* | PS2 Partikelbildung 4 | max. 40 |
| * nicht erfindungsgemäß | | |

Abschließend erfolgt die Erhitzung der Partikel zur Stabilisierung (Wärmebehandlung). Im Fall von PS2 Wasserabtrennung 5 (Vergleichsbeispiel) erfolgte keine weitere Wärmebehandlung als die vorstehend erfolgte beschriebene Trocknung bei 40 °C.

| Versuchsname | Partikel aus | Temperatur [°C] | Dauer [min] | Druck [mbar] |
|---|---|---|---|---|
| PS2 Erhitzung 1 | PS2 Wasserabtrennung 1 | 105 | Min. 960 | 1000 |
| PS2 Erhitzung 2 | PS2 Wasserabtrennung 2 | 105 | Min. 960 | 1000 |
| PS2 Erhitzung 3 | PS2 Erhitzung 2 | 200 | 45 | 200 |
| PS2 Erhitzung 4 | PS2 Erhitzung 2 | 210 | 120 | 200 |
| PS2 Erhitzung 5* | PS2 Wasserabtrennung 3 | 105 | Min. 960 | 1000 |
| PS2 Erhitzung 6 | PS2 Wasserabtrennung 4 | 105 | Min. 960 | 1000 |
| PS2 Erhitzung 7 | PS2 Erhitzung 6 | 210 | 180 | 100 |
| * nicht erfindungsgemäß | | | | |

Das in PS2 Erhitzung 2 erhaltene Material wurde gemahlen um den Einfluss der Erhitzung 4 auf die Korngrößenverteilung zu untersuchen.

Die erhaltenen Partikel wurden anschließend analysiert:

| Material aus Versuch | BET [m$^2$/g] | Löslichkeit [%] | Ausbeute [%] | Weitere Analytik |
|---|---|---|---|---|
| PS2 Erhitzung 1 | 33 | 7,0 (0,2 M NaOH) | 72 | REM |
| PS2 Erhitzung 2 | 10 | 21,8 (0,1 M NaOH) | 79 | KGV, REM, Tg |
| PS2 Erhitzung 3 | 9 | 3,0 (0,1 M NaOH) | | |
| PS2 Erhitzung 4 | 9 | 0,2 (0,1 M NaOH) | | KGV, REM |
| PS2 Erhitzung 5* | 56 | 99,8 (0,1 M NaOH) | 100 | |
| PS2 Erhitzung 6 | 3 | 6,0 (0,1 M NaOH) | 59 | 13C-NMR |
| PS2 Erhitzung 7 | 3 | 0 (0,1 M NaOH) | | |
| PS2 Wasserabtrennung 5* | n.d. | 97,6 (0,1 M NaOH) | 59 | 13C-NMR |
| * nicht erfindungsgemäß; n.d. = nicht bestimmt | | | | |

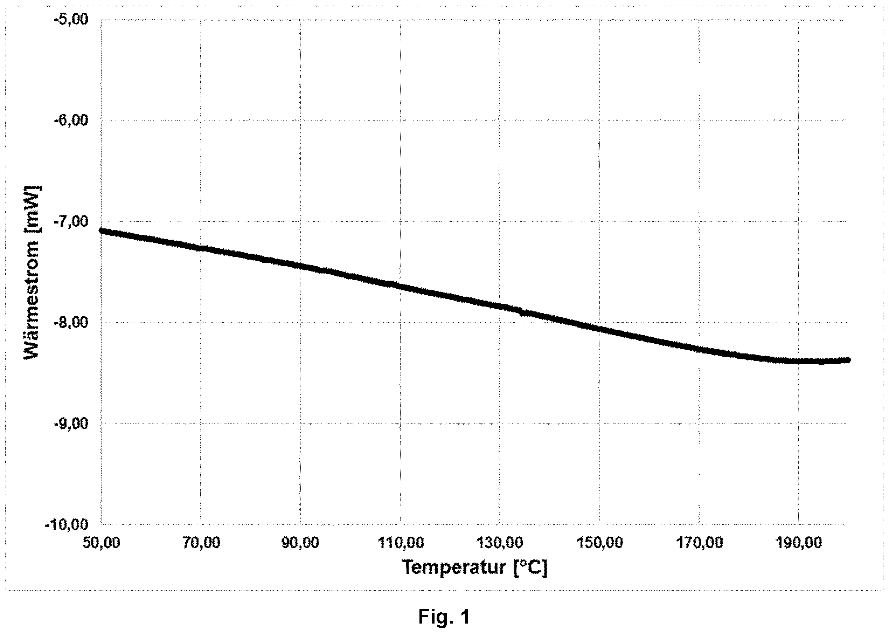

Der Verlauf des Wärmestroms, der mittels DSC gemessen wurde zeigt keinen Wendepunkt zwischen unterschiedlichen Niveaus. Eine Glasübergangstemperatur kann nicht bestimmt werden. Beispielsweise stellt Fig. 1 eine mittels Differentialthermoanalyse erhaltene DSC-Kurve des stabilisierten Lignins aus PS2 Erhitzung 2 dar, die keine Glasübergangstemperatur bis 200°C zeigt.

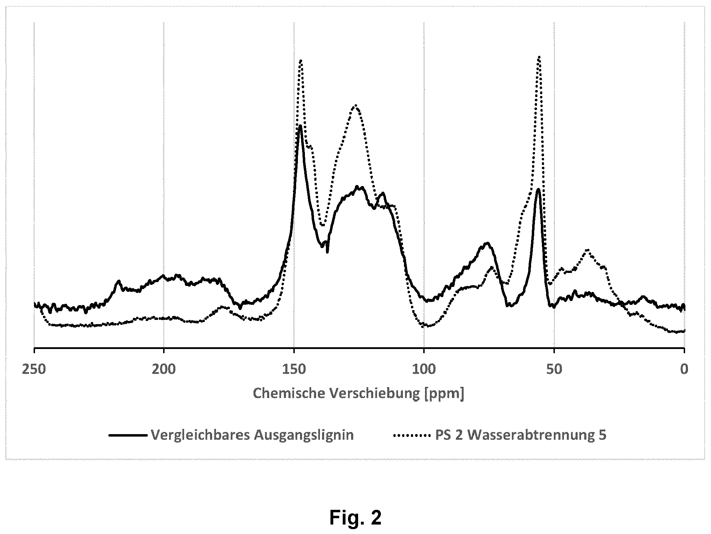

Fig. 2 zeigt $^{13}$C-NMR-Spektren von ligninhaltigem Rohstoff (durchgezogene Linie) und modifiziertem Lignin (PS2 Wasserabtrennung 5, gepunktete Linie).

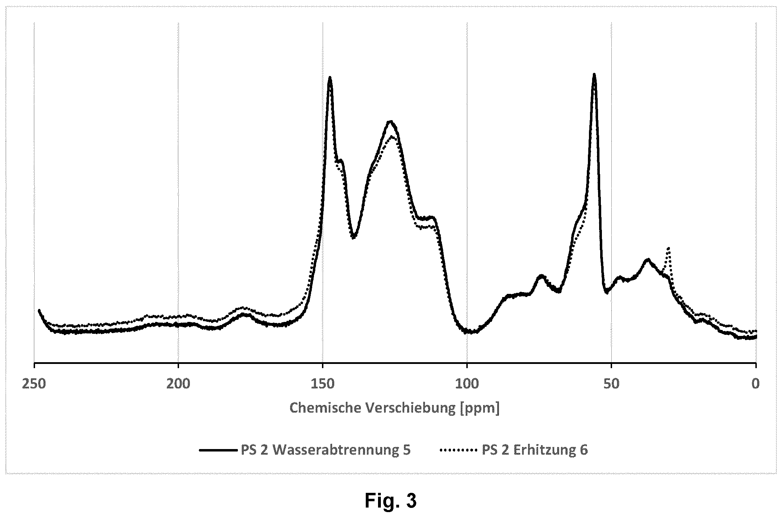

Fig. 3 zeigt $^{13}$C-NMR Spektren von modifiziertem Lignin (PS2 Wasserabtrennung 5, durchgezogene Linie) und stabilisiertem Lignin (PS2 Erhitzung 6, gepunktete Linie) Im $^{13}$C-NMR kann die Modifizierung und die Vernetzung des Lignins nachvollzogen werden. Der Peak bei 60 ppm, für die neu eingeführte Hydroxymethylgruppe ist in den Spektren mit funktionalisiertem Lignin als Schulter des starken Peaks der Methoxygruppen bei 56 ppm erkennbar. Das modifizierte und stabilisierte Lignin zeigt im Bereich um 115 ppm deutlich weniger Guajacyl C-5 sowie p-Hydroxyphenyl C-3 und C-5 an. Die Vernetzung kann an den Unterschieden der Spektren von PS2 Wasserabtrennung 5 und PS2 Erhitzung 6 verdeutlicht werden. Eine Erhitzung der Partikel führte neben einem Rückgang der Hydroxymethylgruppen bei 60 ppm auch zu einer Verschiebung der Intensität des Signals im Bereich um 115 ppm hin zu mehr Intensität beim Signal im Bereich um 127 ppm, das heißt einer Umwandlung der C-H-Gruppen in des Guajacyl C-5 sowie p-Hydroxyphenyl C-3 und C-5 zu C-C. Am markantesten ist ein Peak bei 30 ppm, welcher durch das Kohlenstoffatom der neu gebildeten Methylenbrücken zwischen den Aromaten verursacht wird.

Fig. 4 zeigt die Messung der Korngrößenverteilung KGV von PS2 Erhitzung 2 (oben, d50=12,0 $\mu$m) und PS2 Erhitzung 4 (unten, d50=12,2 $\mu$m).

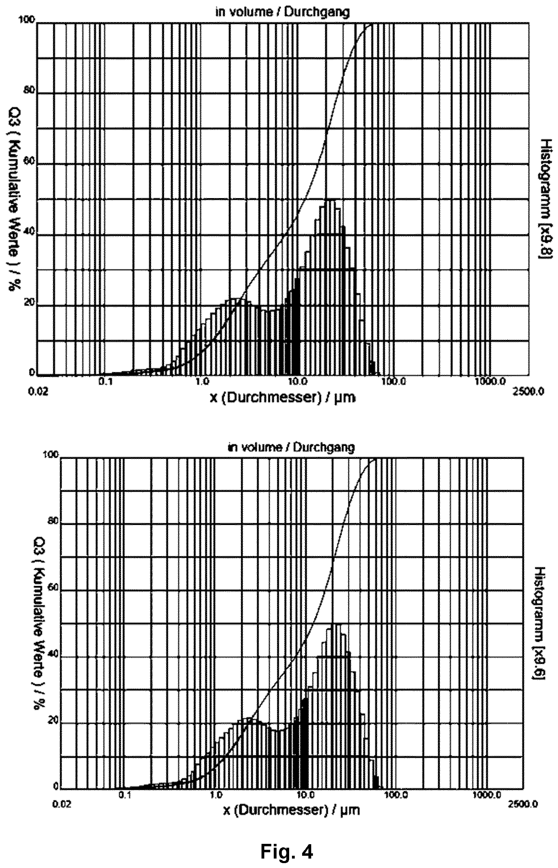

Die Korngrößenmessungen von PS2 Erhitzung 2 und PS2 Erhitzung 4 veranschaulichen die Stabilität der Partikel (Fig. 4). Nach zwei Stunden Ausheizen bei 210°C, also über der für Lignin üblichen Glasübergangstemperatur, sind die Partikel nicht gesintert. Die Korngrößenverteilung ist erhalten geblieben. Gleichzeitig zeigt die Löslichkeit von PS2 Erhitzung 2 und PS2 Erhitzung 4, dass diese über die Erhitzung der Partikel kontrolliert werden kann.

Die Probe PS2 Erhitzung 5, ohne Zugabe von Vernetzer, dient als Referenzprobe und zeigt eine deutlich höhere Alkalilöslichkeit. Gleichermaßen zeigt die Probe PS2 Wasserabtrennung 5, dass eine Trocknung im Sinne einer Wärmebehandlung bei nur 40 °C nicht ausreichend ist, da auch diese Probe eine sehr hohe Alkalilöslichkeit aufweist.

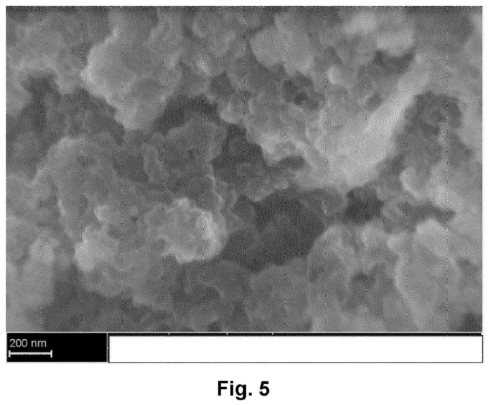

Fig. 5 zeigt eine Aufnahme mittels Rasterelekronenmikroskopie der Partikel von PS2 Erhitzung 1, in der die hohe Oberfläche auch durch die feinpartikuläre Struktur ersichtlich ist. Messparameter der Aufnahme sind: HV 11,00 kV, WD 10,0 mm, InLens, Mag 50,00 K X, B1 = 20,00 $\mu$m, 2 56,6 s Drift Comp. Frame Avg.

**Beispiel 2** - **Stabilisierung durch Wärmebehandlung nach Fällung innerhalb des Schrittes b)**

Rohstoff für dieses Beispiel ist LignoBoost Lignin (BioPiva) gewonnen aus einer Schwarzlauge aus einem Kraft-Aufschluss. Der Feststoff wird zunächst in destilliertem Wasser suspendiert. Durch Zugabe von fester Natronlauge wird ein pH-Wert von etwa 10 eingestellt. Weiterhin wird die Zugabe von Wasser so gewählt, dass ein bestimmte Trockenstoffgehalt erreicht wird. Zur Herstellung des in einer Flüssigkeit gelösten Lignins wird die Mischung bei einer Temperatur für eine bestimmte Zeit gerührt, wobei darauf geachtet wird, dass etwaig verdampftes Wasser durch Zugabe ausgeglichen wird.

| Versuchs**name** | Menge Lignin [g] | Menge und Typ Lösungsadditiv | Menge und Typ Flüssigkeit | Temperatur [°C] | Zeit [min] |
|---|---|---|---|---|---|
| Lösung 5 | 1364,74 | 121,5 g / NaOH | 7635,36 g / Destilliertes Wasser | 80 | 180 |

Das eingesetzte Lignin hat 1,15 mmol/g phenolische Guajacylgruppen und 0,05 mmol/g p-Hydroxyphenylgruppen und damit 1,25 mmol/g vernetzbare Einheiten.

Das in der Flüssigkeit gelöste Lignin wird nun in der ersten Prozessstufe mit einem Vernetzer zu Reaktion gebracht. Das als Vernetzer zur Modifizierung des Lignins eingesetzte Formaldehyd hat 66,6 mmol vernetzbare Einheiten / g trockenes Formaldehyd. Die Reaktion findet in einem Glaskolben statt. Der Vernetzer wird zugegeben, ein Rührwerk sorgt für die nötige Durchmischung. Ein Wasserbad dient der Wärmezufuhr. Nachdem eine Temperatur von 5 °C unter der Reaktionstemperatur durchschritten wird beginnt die Haltezeit. Nach Ablauf der Haltezeit wird das Wasserbad entfernt und die Reaktionslösung für eine weitere Stunde gerührt.

| Versuchsname | Ligninhaltiger Rohstoff | Menge Vernetze r [g] | Typ Vernetzer | Temperatur [°C] | Zeit [min] |
|---|---|---|---|---|---|
| PS1 Modifikation 5 | 200 g Lösung 5 | 7,8 | Formaldehyd | 80 | 180 |
| PS1 Modifikation 6 | 200 g Lösung 5 | 7,8 | Formaldehyd | 80 | 180 |
| PS1 Modifikation 7 | 200 g Lösung 5 | 7,8 | Formaldehyd | 80 | 180 |
| PS1 Modifikation 8 | 200 g Lösung 5 | 7,8 | Formaldehyd | 80 | 180 |
| PS1 Modifikation 9 | 200 g Lösung 5 | 7,8 | Formaldehyd | 80 | 180 |
| PS1 Modifikation 10 | 200 g Lösung 5 | 7,8 | Formaldehyd | 80 | 180 |
| PS1 Modifikation 11 | 200 g Lösung 5 | 7,8 | Formaldehyd | 80 | 180 |
| PS1 Modifikation 12 | 800 g Lösung 5 | 31,1 | Formaldehyd | 80 | 180 |
| PS1 Modifikation 13 | 800 g Lösung 5 | 31,1 | Formaldehyd | 80 | 180 |
| PS1 Modifikation 14 | 200 g Lösung 5 | 7,8 | Formaldehyd | 80 | 180 |
| PS1 Modifikation 15 | 800 g Lösung 5 | 31,1 | Formaldehyd | 80 | 180 |

Die in der ersten Prozessstufe hergestellte Mischung wird anschließend in die zweite Prozessstufe eingebracht.

In der zweiten Prozessstufe erfolgt zunächst die Herstellung der Partikel durch Zugabe von Fällungsmittel (ohne Zugabe von Fällungsadditiv).

| Versuchsname | Mischung umfassend gelöstes modifiziertes Lignin aus der ersten Stufe | Fällungsmittel Menge und Typ | Temperatur [°C] |
|---|---|---|---|
| PS2 Partikelbildung 5 | 207,8 g PS1 Modifikation 5 | 200 g 0,2 M $H_2SO_4$ | 20-25 |
| PS2 Partikelbildung 6 | 207,8 g PS1 Modifikation 6 | 200 g 0,2 M $H_2SO_4$ | 20-25 |
| PS2 Partikelbildung 7 | 207,8 g PS1 Modifikation 7 | 200 g 0,1 M $H_2SO_4$ | 20 - 25 |
| PS2 Partikelbildung 8 | 207,8 g PS1 Modifikation 8 | 200 g 0,1 M $H_2SO_4$ | 20 - 25 |
| PS2 Partikelbildung 9 | 207,8 g PS1 Modifikation 9 | 200 g 0,1 M $H_2SO_4$ | 20-25 |
| PS2 Partikelbildung 10 | 207,8 g PS1 Modifikation 10 | 200 g 0,1 M $H_2SO_4$ | 20-25 |
| PS2 Partikelbildung 11 | 207,8 g PS1 Modifikation 11 | 200 g 0,1 M $H_2SO_4$ | 20-25 |
| PS2 Partikelbildung 12 | 415,6 g PS1 Modifikation 12 | 400 g 0,1 M $H_2SO_4$ | 20-25 |
| PS2 Partikelbildung 13 | 415,6 g PS1 Modifikation 13 | 400 g 0,1 M $H_2SO_4$ | 20-25 |
| PS2 Partikelbildung 14 | 207,8 g PS1 Modifikation 14 | 200 g 0,1M $H_2SO_4$ | 20-25 |
| PS2 Partikelbildung 15 | 415,6 g PS1 Modifikation 15 | 400 g 0,1 M $H_2SO_4$ | 20-25 |

Die Stabilisierung der Partikel erfolgte innerhalb der zweiten Prozessstufe durch eine Wärmebehandlung nach der erfolgten Fällung innerhalb des Schrittes b).

| Versuchsname bzgl. Wärmebehandlung Innerhalb Schritt b) | Ligninpartikel aus | Temperatur [°C] | Dauer [min] |
|---|---|---|---|
| PS2 Wärmebehandlung 1 | PS2 Partikelbildung 5 | 95 | 180 |
| PS2 keine WB* | PS2 Partikelbildung 6 | - | - |
| PS2 Wärmebehandlung 2 | PS2 Partikelbildung 7 | 95 | 180 |
| PS2 Wärmebehandlung 3 | PS2 Partikelbildung 8 | 110 | 180 |
| PS2 Wärmebehandlung 4 | PS2 Partikelbildung 9 | 130 | 180 |
| PS2 Wärmebehandlung 5 | PS2 Partikelbildung 10 | 150 | 180 |
| PS2 keine WB* | PS2 Partikelbildung 11 | - | - |
| PS2 Wärmebehandlung 6 | PS2 Partikelbildung 12 | 95 | 180 |
| PS2 Wärmebehandlung 7 | PS2 Partikelbildung 13 | 110 | 180 |
| PS2 Wärmebehandlung 8 | PS2 Partikelbildung 12 | 130 | 180 |
| PS2 Wärmebehandlung 9 | PS2 Partikelbildung 14 | 150 | 180 |
| PS2 keine WB* | PS2 Partikelbildung 15 | - | - |
| PS2 Wärmebehandlung 10 | PS2 Partikelbildung 12 | 95 | 180 |

(fortgesetzt)

| Versuchsname bzgl. Wärmebehandlung Innerhalb Schritt b) | Ligninpartikel aus | Temperatur [°C] | Dauer [min] |
|---|---|---|---|
| PS2 Wärmebehandlung 11 | PS2 Partikelbildung 13 | 110 | 180 |
| PS2 Wärmebehandlung 12 | PS2 Partikelbildung 12 | 130 | 180 |
| PS2 Wärmebehandlung 13 | PS2 Partikelbildung 14 | 150 | 180 |
| PS2 keine WB* | PS2 Partikelbildung 15 | - | - |
| * nicht erfindungsgemäß; WB = Wärmebehandlung | | | |

Die Abtrennung der Flüssigkeit von den Partikeln erfolgt zunächst durch Filtration. Anschließend werden die nach der Filtration noch feuchten Partikel getrocknet.

| Versuchsname | Partikel aus | Trocknungstemperatur [°C] | Dauer [h] | Druck [mbar] |
|---|---|---|---|---|
| PS2 Wasserabtrennung 6 | PS2 Wärmebehandlung 1 | 105 | 48 | 1000 |
| PS2 Wasserabtrennung 7* | PS2 Partikelbildung 6 | 105 | 48 | 1000 |
| PS2 Wasserabtrennung 8 | PS2 Wärmebehandlung 2 | 105 | 48 | 1000 |
| PS2 Wasserabtrennung 9 | PS2 Wärmebehandlung 3 | 105 | 48 | 1000 |
| PS2 Wasserabtrennung 10 | PS2 Wärmebehandlung 4 | 105 | 48 | 1000 |
| PS2 Wasserabtrennung 11 | PS2 Wärmebehandlung 5 | 105 | 48 | 1000 |
| PS2 Wasserabtrennung 12* | PS2 Partikelbildung 11 | 105 | 48 | 1000 |
| PS2 Wasserabtrennung 13 | PS2 Wärmebehandlung 6 | 40 | 48 | 100 |
| PS2 Wasserabtrennung 14 | PS2 Wärmebehandlung 7 | 40 | 48 | 100 |
| PS2 Wasserabtrennung 15 | PS2 Wärmebehandlung 8 | 40 | 48 | 100 |
| PS2 Wasserabtrennung 16 | PS2 Wärmebehandlung 9 | 40 | 48 | 100 |
| PS2 Wasserabtrennung 17* | PS2 Partikelbildung 15 | 40 | 48 | 100 |
| PS2 Wasserabtrennung 18 | PS2 Wärmebehandlung 10 | 150 | 48 | 1000 |
| PS2 Wasserabtrennung 19 | PS2 Wärmebehandlung 11 | 150 | 48 | 1000 |
| PS2 Wasserabtrennung 20 | PS2 Wärmebehandlung 12 | 150 | 48 | 1000 |
| PS2 Wasserabtrennung 21 | PS2 Wärmebehandlung 13 | 150 | 48 | 1000 |
| PS2 Wasserabtrennung 22* | PS2 Partikelbildung 15 | 150 | 48 | 1000 |
| * nicht erfindungsgemäß | | | | |

Die erhaltenen Partikel wurden anschließend analysiert:

| Material aus Versuch | BET [m²/g] | Löslichkeit [%] | Ausbeute [%] | Weitere Analytik |
|---|---|---|---|---|
| PS2 Wasserabtrennung 6 | 15,0 | 3,8 (0,1 M NaOH) | n.d. | KGV, pH/LFK, Tg, Löslichkeit EtOH, VDA278 |
| PS2 Wasserabtrennung 7* | 0,3 | 5,9 (0,1 M NaOH) | n.d. | |
| PS2 Wasserabtrennung 8 | 66,9 | 5,3 (0,1 M NaOH) | 76,4 | KGV, Tg, Löslichkeit EtOH, VDA278, 13C-ss-NMR |
| PS2 Wasserabtrennung 9 | 78,3 | 2,9 (0,1 M NaOH) | 77,7 | KGV, pH/LFK, Tg, Löslichkeit DMF, VDA278 |
| PS2 Wasserabtrennung 10 | 81,2 | 1,7 (0,1 M NaOH) | n.d. | KGV, 13C-ss-NMR, pH/LFK, Py-GC/MS, Tg |
| PS2 Wasserabtrennung 11 | 65,0 | 4,6 (0,1 M NaOH) | 79,3 | KGV, Tg, Löslichkeit DMF, VDA278 |
| PS2 Wasserabtrennung 12* | 0,7 | 12,2 (0,1 M NaOH) | 87,3 | KGV |
| PS2 Wasserabtrennung 13 | 46,4 | 8,7 (0,1 M NaOH) | 77,5 | |
| PS2 Wasserabtrennung 14 | 60,2 | 6,7 (0,1 M NaOH) | n.d. | Tg |
| PS2 Wasserabtrennung 15 | 82,1 | 5,6 (0,1 M NaOH) | n.d. | KGV, 13C-ss-NMR, pH/LFK, Py-GC/MS, Tg, |
| PS2 Wasserabtrennung 16 | 76,0 | 4,8 (0,1 M NaOH) | 75,6 | Tg |
| PS2 Wasserabtrennung 17* | 0,5 | 86,8 (0,1 M NaOH) | 86,7 | KGV |
| PS2 Wasserabtrennung 18 | 18,0 | 0,0 (0,1 M NaOH) | 70,3 | Tg |
| PS2 Wasserabtrennung 19 | 18,4 | 0,9 (0,1 M NaOH) | 68,8 | KGV, Tg |
| PS2 Wasserabtrennung 20 | 32,0 | 0,4 (0,1 M NaOH) | 74,7 | KGV, 13C-ss-NMR, Py-GC/MS |
| PS2 Wasserabtrennung 21 | 53,2 | 1,9 (0,1 M NaOH) | 89,4 | Tg |
| PS2 Wasserabtrennung 22* | 0,1 | 0,0 (0,1 M NaOH) | 78,9 | |
| * nicht erfindungsgemäß; n.d. = nicht bestimmt | | | | |

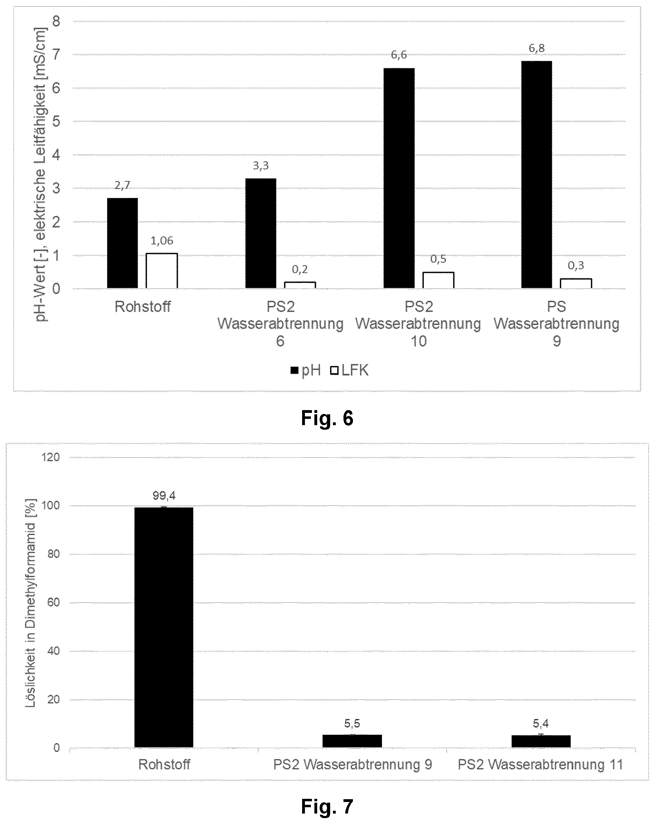

Fig. 6 zeigt pH-Wert und elektrische Leitfähigkeit des ligninhaltigen Rohstoffs, PS2 Wasserabtrennung 6, PS2 Wasserabtrennung 9 und PS Wasserabtrennung 10. Im Vergleich zum ligninhaltigen Rohstoff weisen die Partikel, stabilisiert in Schritt b) nach der Fällung einen niedrigere Leitfähigkeit und in Abhängigkeit vom verwendeten Fällungsmittel einen höheren pH-Wert auf.

Fig. 7 zeigt die Löslichkeit von ligninhaltigem Rohstoff, PS2 Wasserabtrennung 9 und PS2 Wasserabtrennung 11 in Dimethylformamid.

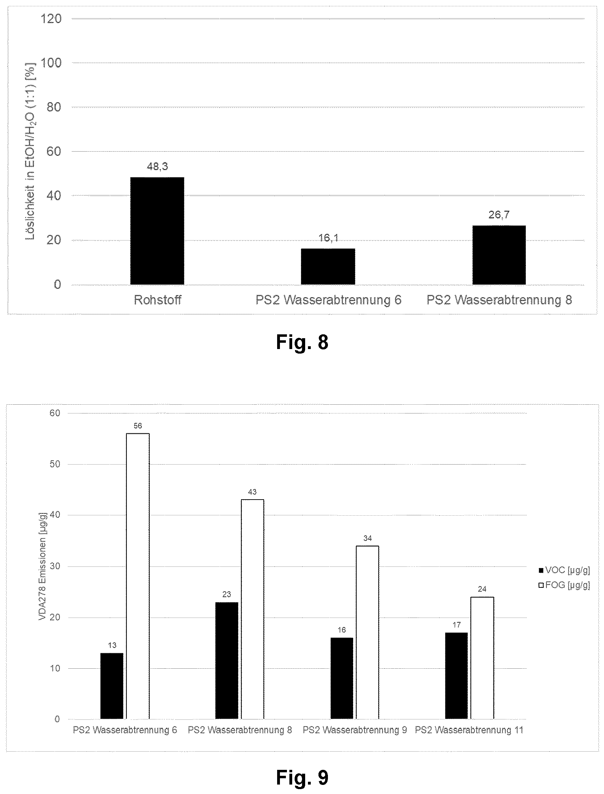

Fig. 8 zeigt die Löslichkeit von ligninhaltigem Rohstoff, PS2 Wasserabtrennung 6 und PS2 Wasserabtrennung 8 in einem Ethanol-Wassergemisch (1:1).

Die Ergebnisse veranschaulichen, dass im Vergleich mit dem ligninhaltigen Rohstoff die Stabilisierung der Partikel in Schritt b) nach der Fällung zu einer deutlichen Abnahme der Löslichkeit in polaren Lösungsmitteln führt.

Fig. 9 zeigt die Emissionen gemäß VDA278 von PS2 Wasserabtrennung 6, PS2 Wasserabtrennung 8, PS2 Wasserabtrennung 9 und PS2 Wasserabtrennung 11.

Partikel, die in Schritt b) nach der Fällung stabilisiert wurden, lassen sich durch eine geringe Emission gemäß VDA278 charakterisieren. Die Höhe der Emissionen wird von der Temperatur während der Stabilisierung der Partikel in Schritt b) nach der Fällung beeinflusst. Mit zunehmender Stabilisierungstemperatur nimmt die Emission gemäß VDA278 ab.

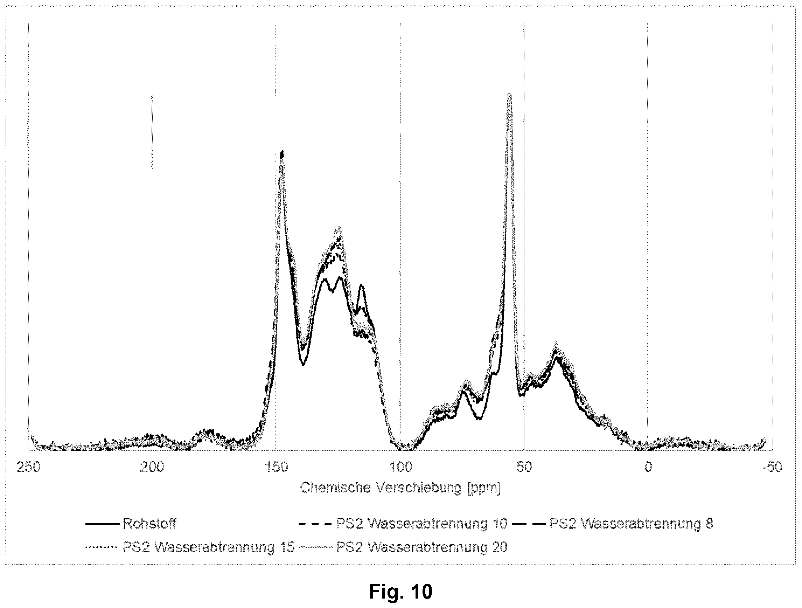

Fig. 10 zeigt $^{13}$C-NMR-Spektren von ligninhaltigem Rohstoff (schwarze durchgezogene Linie) und in Stufe b) stabilisierte Lignine (PS2 Wasserabtrennung 10, PS2 Wasserabtrennung 8, PS2 Wasserabtrennung 15, PS2 Wasserabtrennung 20 graue durchgezogene Linie und schwarze gepunktete Linie).

Analog zur Stabilisierung der Partikel in Schritt d) kann auch bei der Stabilisierung der Partikel in Schritt b) nach der Fällung die Modifizierung und die Vernetzung des Lignins im $^{13}$C-NMR nachvollzogen werden. Der Peak bei 60 ppm, für die neu eingeführte Hydroxymethylgruppe ist in den Spektren mit funktionalisiertem Lignin als Schulter des starken Peaks der Methoxygruppen bei 56 ppm erkennbar. Das modifizierte und stabilisierte Lignin zeigt im Bereich um 115 ppm deutlich weniger Guajacyl C-5 sowie p-Hydroxyphenyl C-3 und C-5 an. Im Vergleich mit der Stabilisierung in Schritt d) ist bei einer Stabilisierung der Partikel in Schritt b) nach der Fällung der Peak bei 30 ppm, welcher durch das Kohlenstoffatom der neu gebildeten Methylenbrücken zwischen den Aromaten verursacht wird, lediglich als Schulter ausgeprägt.

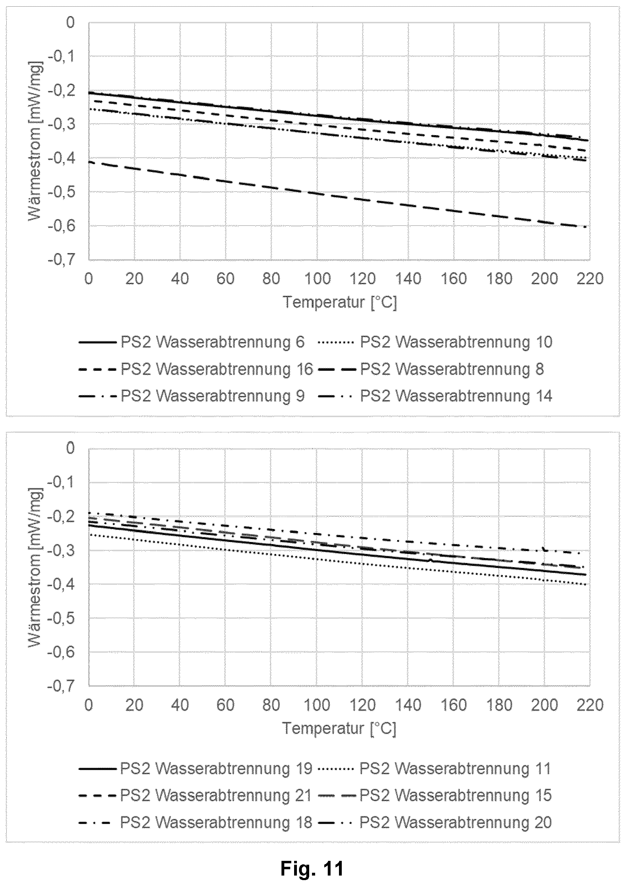

Fig. 11 zeigt den Verlauf des Wärmestroms, der mittels DSC gemessen wurde, von Partikeln, die im Schritt b) nach der Fällung stabilisert wurden. Ein Wendepunkt zwischen unterschiedlichen Niveaus kann nicht detektiert werden. Eine Glasübergangstemperatur kann nicht bestimmt werden. Fig. 11 eine mittels Differentialthermoanalyse erhaltene DSC-Kurven der stabilisierten Lignin aus PS2 Wasserabtrennung 6, PS2 Wasserabtrennung 8, PS2 Wasserabtrennung 9, PS2 Wasserabtrennung 10, PS2 Wasserabtrennung 11, PS2 Wasserabtrennung 14, PS2 Wasserabtrennung 15, PS2 Wasserabtrennung 16, PS2 Wasserabtrennung 18, PS2 Wasserabtrennung 19, PS2 Wasserabtrennung 20 dar und PS2 Wasserabtrennung 21, die keine Glasübergangstemperatur bis 200°C zeigt.

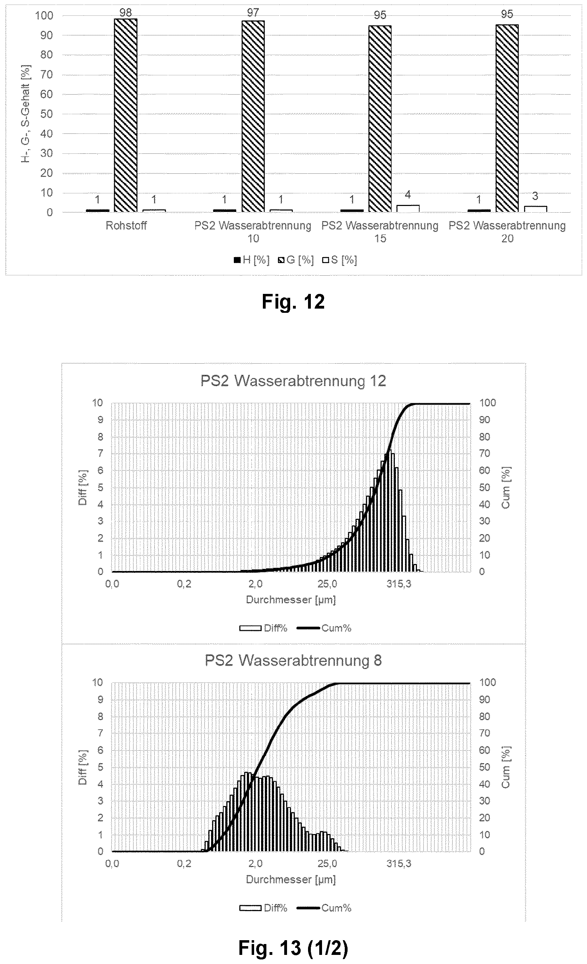

Fig. 12 zeigt die prozentuale Zusammensetzung der Ligninbausteine ermittelt mittels Py-GC/MS. Der prozentuale Gehalt an S-Bausteinen nimmt infolge der Stabilisierung der Partikel in Schritt b) nach der Fällung zu. Dieses ist auf die Einführung der Hydroxymethylgruppe infolge der Modifizierung sowie die neu gebildeten Methylenbrücken zwischen den Aromaten infolge der Stabilisierung zurückzuführen.

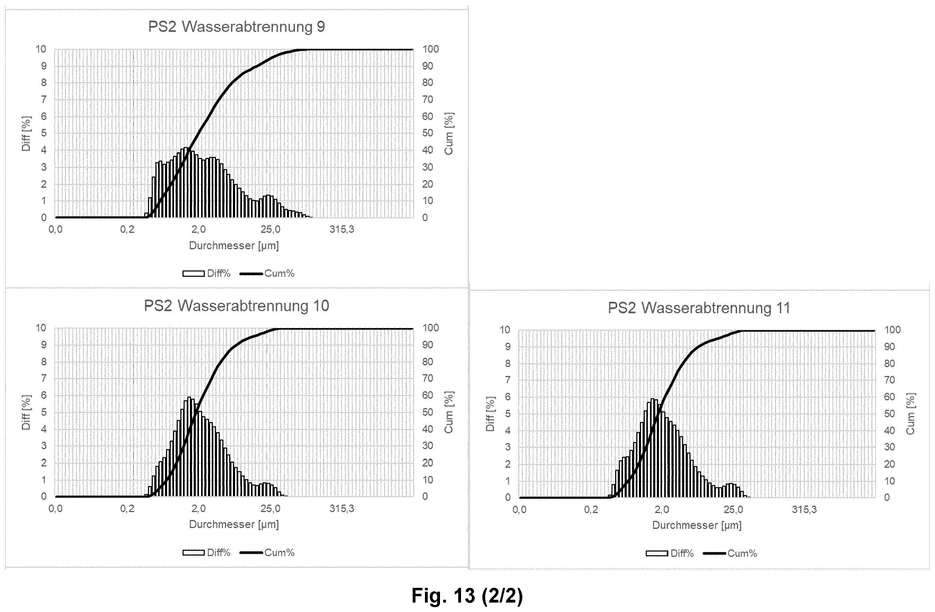

Fig. 13 zeigt die Messung der Korngrößenverteilung KGV von PS2 Wasserabtrennung 8 (d50=2,1 $\mu$m), PS2 Wasserabtrennung 9 (d50= 1,9 $\mu$m), PS2 Wasserabtrennung 10 (d50= 1,7 $\mu$m), PS2 Wasserabtrennung 11 (d50= 1,7 $\mu$m), PS2 Wasserabtrennung 12 (d50=135,2 $\mu$m).

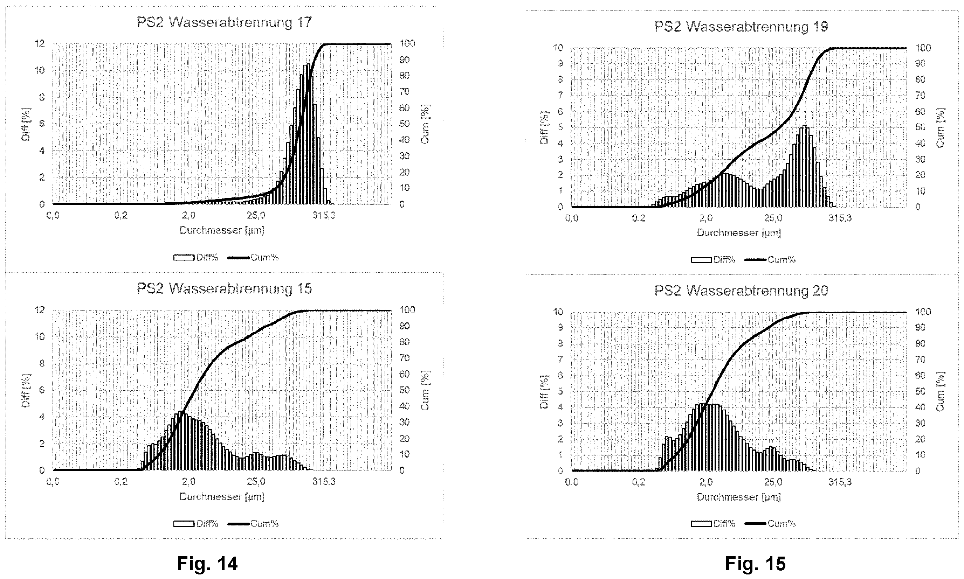

Fig. 14 zeigt die Messung der Korngrößenverteilung KGV von PS2 Wasserabtrennung 17 (d50=125,2 $\mu$m) und PS2 Wasserabtrennung 15 (d50=2,4 $\mu$m).

Fig. 15 zeigt die Messung der Korngrößenverteilung KGV von PS2 Wasserabtrennung 19 (d50=27,1 $\mu$m) und PS2 Wasserabtrennung 20 (d50=2,4 $\mu$m).

Die Korngrößenmessungen zeigen, dass die Korngrößenverteilung (KGV) über die Temperatur während der Stabilisierung kontrolliert werden kann. Die Probe PS2 Wasserabtrennung 12, ohne Stabilsierung der Partikel in Schritt b) nach der Fällung, dient als Referenzprobe und zeigt eine höhere Alkalilöslichkeit, sowie eine geringe Oberfläche. Durch Temperierung der Partikel in Schritt b) nach der Fällung werden deutlich feinere Partikel mit hoher Oberfläche und geringer Löslichkeit generiert. Gleichermaßen zeigen die Proben PS2 Wasserabtrennung 17 und PS2 Wasserabtrennung 15, dass milde Trocknungsbedingungen bei reduziertem Druck zu einem ähnlichen Ergebnis führen können.

Zudem zeigen die Proben PS2 Wasserabtrennung 19 und PS2 Wasserabtrennung 20, dass durch Erhöhung der Temperatur während der Trocknung im Sinne der Wasserabtrennung, die Alkalilöslichkeiten gesteuert werden kann.

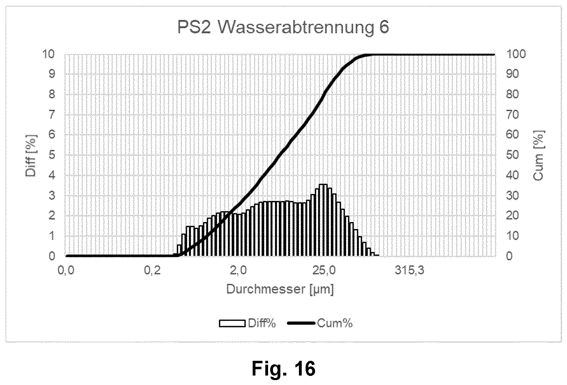

Fig. 16 zeigt die Messung der Korngrößenverteilung KGV von PS2 Wasserabtrennung 6 (d50= 6,5 $\mu$m).

Die Korngrößenmessung zeigt, dass auch beim Einsatz von höher konzentriertem Fällungsmittel eine vorteilhafte Partikelgrößenverteilung erzielt werden kann. Diese Probe zeichnet sich durch eine geringe alkalische sowie ethanolische Löslichkeit auf.

**Patentansprüche**

1. Verfahren zur Herstellung eines Lignins in Partikelform aus einer Flüssigkeit, die ligninhaltigen Rohstoff enthält, wobei Lignin zumindest zum Teil in der Flüssigkeit gelöst ist, wobei das Verfahren folgende Schritte umfasst:

    a) Umsetzen von in der Flüssigkeit gelöstem Lignin mit mindestens einem Vernetzer in der Flüssigkeit bei einer Temperatur im Bereich von 50 bis 180°C, um gelöstes modifiziertes Lignin in der Flüssigkeit zu erhalten,
    b) Fällen des in Schritt a) erhaltenen gelösten modifizierten Lignins durch Mischen der Flüssigkeit mit einem Fällungsmittel bei einer Temperatur im Bereich von 0 bis unter 150°C unter Bildung von Ligninpartikeln in der Flüssigkeit, und
    c) Abtrennen der Flüssigkeit von den in Schritt b) gebildeten Ligninpartikeln,

    wobei
    in Schritt b) die mit dem Fällungsmittel gemischte Flüssigkeit nach der Fällung bei einer Temperatur im Bereich von 60 bis 200 °C für eine Dauer von 1 Minute bis 6 Stunden wärmebehandelt wird, und/oder
    in einem zusätzlichen Schritt d) nach Schritt c) die von der Flüssigkeit abgetrennten Ligninpartikel bei einer Temperatur im Bereich von 60 bis 600°C wärmebehandelt werden.

**2.** Verfahren nach Anspruch 1, **dadurch gekennzeichnet, dass** die Flüssigkeit, die ligninhaltigen Rohstoff enthält, ausgewählt ist aus

- Schwarzlauge aus dem Kraftaufschluss von holzartiger Biomasse oder daraus hergestellten Feststoffen, die mit einer Flüssigkeit vermischt werden,
- Feststoffen aus der enzymatischen Hydrolyse von holzartiger Biomasse, die mit einer Flüssigkeit vermischt werden,
- Schwarzlauge aus dem Aufschluss von holzartiger Biomasse mit Sulfiten (Lignosulfonaten) oder daraus hergestellten Feststoffen, die mit einer Flüssigkeit vermischt werden, oder
- Flüssigkeiten aus dem Aufschluss von holzartiger Biomasse mit organischen Lösungsmitteln oder organische Säuren oder daraus hergestellten Feststoffen, die mit einer Flüssigkeit vermischt werden.

**3.** Verfahren nach einem der vorhergehenden Ansprüche, **dadurch gekennzeichnet, dass** die Flüssigkeit umfasst oder ausgewählt ist aus

- einer sauren wässrigen Flüssigkeit oder einer alkalischen wässrigen Flüssigkeit, bevorzugt Natronlauge,
- mindestens einer Carbonsäure, bevorzugt Ameisensäure und/oder Essigsäure, oder
- mindestens einem Alkohol, bevorzugt Ethanol.

**4.** Verfahren nach einem der vorhergehenden Ansprüche, **dadurch gekennzeichnet, dass** der mindestens eine Vernetzer ausgewählt ist aus Aldehyden, Epoxiden, Säureanhydriden, Polyisocyanaten oder Polyolen, wobei der mindestens eine Vernetzer bevorzugt aus Aldehyden ausgewählt ist, besonders bevorzugt Formaldehyd, Furfural oder Zuckeraldehyden,
und/oder
dass das Fällungsmittel ausgewählt ist aus mindestens einer Säure, bevorzugt einer wässrigen Säure oder einem sauren Gas, einer Base, bevorzugt einer wässrigen Base, Wasser, oder einem Salz, bevorzugt einer salzhaltigen wässrigen Lösung, wobei das Fällungsmittel bevorzugt ausgewählt ist aus

- einer Säure, bevorzugt einer wässrigen Säure, insbesondere wenn die Flüssigkeit eine wässrige Base, bevorzugt Natronlauge, umfasst oder ist, oder
- Wasser, insbesondere wenn die Flüssigkeit mindestens eine Carbonsäure, bevorzugt Ameisensäure und/oder Essigsäure, oder mindestens ein Alkohol, bevorzugt Ethanol, umfasst oder ist.

**5.** Verfahren nach einem der vorhergehenden Ansprüche, **dadurch gekennzeichnet, dass** in Schritt b) der pH-Wert der Flüssigkeit nach dem Mischen mit dem Fällungsmittel weniger als 10 beträgt, die Fällung vorzugsweise bei einem pH-Wert in einem Bereich von 0,5 bis 9, besonders bevorzugt von 1,0 bis 8,5, ganz besonders bevorzugt von 1,5 bis 8,0, noch bevorzugter von 2,0 bis 7,5, noch bevorzugter von 2,5 oder >2,5 bis 7,0, noch bevorzugter von >2,5 oder 3,0 bis 6,0, am meisten bevorzugt von >2,5 oder 3,0 bis <6,0 oder <5,5, durchgeführt wird,
und/oder
dass in Schritt b) zusätzlich zum Fällungsmittel ein Fälladditiv zugemischt wird und/oder in Schritt a) der Vernetzer in situ aus einer Vorstufe des Vernetzers gebildet wird, die in der Flüssigkeit enthalten ist.

**6.** Verfahren nach einem der vorhergehenden Ansprüche, **dadurch gekennzeichnet, dass** der Trockenstoffgehalt der Flüssigkeit, die den ligninhaltigen Rohstoff enthält, in Schritt b) nach der Mischung mit Fällungsmittel und gegebenenfalls Fälladditiv bei mindestens 2 Gew.-%, besonders bevorzugt bei mindestens 3 Gew.-%, ganz besonders bevorzugt bei mindestens 4 Gew.-%, liegt, wobei der Trockenstoffgehalt jeweils vorzugsweise bei <26 Gew.-%, besonders bevorzugt bei <24 Gew.-%, ganz besonders bevorzugt bei < 20 Gew.-% liegt.

**7.** Verfahren nach einem der vorhergehenden Ansprüche, **dadurch gekennzeichnet, dass**

die Umsetzung in Schritt a) bei einer Temperatur im Bereich von 60 bis 130°C, bevorzugt 70 bis 100°C erfolgt, vorzugsweise bei einem pH-Wert der Flüssigkeit in einem Bereich von 7 bis 14, besonders bevorzugt von >7 bis 14, ganz besonders bevorzugt von 8 bis 13,5 und insbesondere von 9 bis 13, und/oder
die Fällung in Schritt b) bei einer Temperatur im Bereich von 0 bis unter 100°C, bevorzugt 0 bis unter 90°C, bevorzugter 0 bis unter 80°C, ganz besonders bevorzugt von 0 bis unter 40°C, insbesondere von 10 bis unter 30°C durchgeführt wird, wenn die Wärmebehandlung im zusätzlichen Schritt d) erfolgt, oder die Fällung in Schritt b) bei einer Temperatur im Bereich von 90 bis 130°C erfolgt, wenn die Wärmebehandlung in Schritt b) erfolgt und/oder die Wärmebehandlung in Schritt b) bei einer Temperatur im Bereich von 80 bis 170 °C, besonders bevorzugt von 80 °C oder 100 °C bis 160 °C, ganz besonders bevorzugt von 80 bis unter 150°C, noch bevorzugter bei 100 bis unter 150°C erfolgt, wobei die Höchsttemperatur vorzugsweise zumindest dann unter 150 °C liegt, wenn als Fällungsmittel eine Base, bevorzugt eine wässrige Base eingesetzt wird, und/oder die Wärmebehandlung in dem zusätzlichen Schritt d) bei einer Temperatur im Bereich von 80 bis 400°C, bevorzugt 80 bis 300°C, weiter bevorzugt 80 bis 240 °C, noch weiter bevorzugt 90 bis 130°C erfolgt.

8. Verfahren nach einem der vorhergehenden Ansprüche, **dadurch gekennzeichnet, dass** die Dauer der Wärmebehandlung der von der Flüssigkeit abgetrennten Ligninpartikel in dem zusätzlichen Schritt d) 1 Minute bis 48 Stunden, vorzugsweise 1 Minute bis 24 Stunden, noch bevorzugter 10 Minuten bis 18 Stunden oder 30 Minuten bis 12 Stunden beträgt,
und/oder
dass die Dauer der Wärmebehandlung nach der Fällung in Schritt b) mindestens 5 oder mindestens 10 Minuten, vorzugsweise mindestens 15 oder mindestens 20 Minuten, besonders bevorzugt mindestens 25 Minuten oder mindestens 30 Minuten beträgt oder die Dauer der Wärmebehandlung nach der Fällung in Schritt b) in einem Bereich von 5 Minuten bis 5 Stunden, vorzugsweise von 10 Minuten bis 4,5 Stunden, besonders bevorzugt von 15 Minuten bis 4 Stunden, ganz besonders bevorzugt von 20 Minuten bis 3,5 Stunden, insbesondere von 25 oder 30 Minuten bis 3 Stunden, liegt.

9. Verfahren nach einem der vorhergehenden Ansprüche, **dadurch gekennzeichnet, dass** die in dem Verfahren gebildeten Ligninpartikel

einen d50-Wert der Korngrößenverteilung, bezogen auf das Volumenmittel, von weniger als 500 $\mu$m, bevorzugt weniger als 50 $\mu$m, noch bevorzugter von weniger als 20 $\mu$m, aufweisen, wobei der d50-Wert der Korngrößenverteilung vorzugsweise durch einen Mahlschritt erzielt wird, der nach Schritt c) oder nach Schritt d) durchgeführt wird, und/oder
eine STSA-Oberfläche im Bereich von 10 $m^2$/g bis 180 $m^2$/g, bevorzugt von 20 $m^2$/g bis 180 $m^2$/g, weiter bevorzugt von 35 $m^2$/g bis 150 oder 180 $m^2$/g, insbesondere bevorzugt von 40 $m^2$/g bis 120 oder 180 $m^2$/g aufweisen.

10. Ligninpartikel, erhältlich nach einem Verfahren nach einem der Ansprüche 1 bis 9, wobei die Ligninpartikel

einen d50-Wert der Korngrößenverteilung, bezogen auf das Volumenmittel, von weniger als 500 $\mu$m, bevorzugt weniger als 50 $\mu$m, noch bevorzugter von weniger als 20 $\mu$m, aufweisen, und/oder
eine STSA-Oberfläche im Bereich von 2 $m^2$/g bis 180 $m^2$/g, bevorzugt 10 $m^2$/g bis 180 $m^2$/g, bevorzugt von 20 $m^2$/g bis 180 $m^2$/g, weiter bevorzugt von 35 $m^2$/g bis 150 oder 180 $m^2$/g, insbesondere bevorzugt von 40 $m^2$/g bis 120 oder 180 $m^2$/g aufweisen.

11. Ligninpartikel nach Anspruch 10, wobei die Partikel einen Anteil an in einem alkalischen Medium löslichen Verbindungen von weniger als 30%, bevorzugt von weniger als 25%, besonders bevorzugt von weniger als 20%, darüber hinaus bevorzugt von weniger als 15%, darüber hinaus besonders bevorzugt von weniger als 10%, ferner bevorzugt von weniger als 7,5%, insbesondere von weniger als 5% aufweisen, am meisten bevorzugt von weniger als 2,5% oder von weniger als 1%, jeweils bezogen auf das Gesamtgewicht der Partikel, wobei das alkalische Medium eine wässrige Lösung von NaOH (0,1 Mol/l oder 0,2 Mol/l) darstellt und der Anteil bestimmt wird gemäß der in der Beschreibung beschriebenen Methode,
und/oder wobei die Partikel einen Anteil an aus ihnen ausgasbaren organischen Verbindungen (Emissionen) aufweisen, bestimmt gemäß Thermodesorptionsanalyse nach VDA 278 (05/2016), der bei <200 $\mu$g/g Ligninpartikel, besonders bevorzugt bei <175 $\mu$g/g Ligninpartikel, ganz besonders bevorzugt bei <150 $\mu$g/g Ligninpartikel, noch bevorzugter bei <100 $\mu$g/g Ligninpartikel, noch bevorzugter bei <50 $\mu$g/g Ligninpartikel, insbesondere bei <25 $\mu$g/g Ligninpartikel liegt.

12. Ligninpartikel nach Anspruch 10 oder 11, wobei die Partikel einen $^{14}$C-Gehalt aufweisen, der größer als 0,20 Bq/g Kohlenstoff, insbesondere bevorzugt größer als 0,23 Bq/g Kohlenstoff, bevorzugt jedoch kleiner als 0,45 Bq/g Kohlenstoff, noch bevorzugter kleiner als 0,4 Bq/g Kohlenstoff, besonders bevorzugt kleiner als 0,35Bq/g Kohlenstoff ist, und/oder wobei die Partikel einen Kohlenstoffgehalt bezogen auf die aschefreie Trockensubstanz zwischen 60 Massen-% und 80 Massen-%, bevorzugt zwischen 65 Massen-% und 75 Massen-% aufweisen.

13. Ligninpartikel, die

einen d50-Wert der Korngrößenverteilung, bezogen auf das Volumenmittel, von weniger als 500 $\mu$m, bevorzugt weniger als 50 $\mu$m, noch bevorzugter von weniger als 20 $\mu$m, aufweisen, und/oder

eine STSA-Oberfläche im Bereich von 2 m²/g bis 180 m²/g, bevorzugt 10 m²/g bis 180 m²/g, bevorzugt von 20 m²/g bis 180 m²/g, weiter bevorzugt von 35 m²/g bis 150 oder 180 m²/g, insbesondere bevorzugt von 40 m²/g bis 120 oder 180 m²/g aufweisen,

wobei die Partikel einen Anteil an in einem alkalischen Medium löslichen Verbindungen von weniger als 30%, bevorzugt von weniger als 25%, besonders bevorzugt von weniger als 20%, darüber hinaus bevorzugt von weniger als 15%, darüber hinaus besonders bevorzugt von weniger als 10%, ferner bevorzugt von weniger als 7,5%, insbesondere von weniger als 5% aufweisen, am meisten bevorzugt von weniger als 2,5% oder von weniger als 1%, jeweils bezogen auf das Gesamtgewicht der Partikel, wobei das alkalische Medium eine wässrige Lösung von NaOH (0,1 Mol/l oder 0,2 Mol/l) darstellt und der Anteil bestimmt wird gemäß der in der Beschreibung beschriebenen Methode, und/oder die Partikel einen Anteil an aus ihnen ausgasbaren organischen Verbindungen (Emissionen) aufweisen, bestimmt gemäß Thermodesorptionsanalyse nach VDA 278 (05/2016), der bei <200 $\mu$g/g Ligninpartikel, besonders bevorzugt bei <175 $\mu$g/g Ligninpartikel, ganz besonders bevorzugt bei <150 $\mu$g/g Ligninpartikel, noch bevorzugter bei <100 $\mu$g/g Ligninpartikel, noch bevorzugter bei <50 $\mu$g/g Ligninpartikel, insbesondere bei <25 $\mu$g/g Ligninpartikel, liegt.

14. Eine Verwendung der Ligninpartikel nach einem oder mehreren der Ansprüche 10 bis 13 als Füllstoff, insbesondere in Kautschukzusammensetzungen.

15. Eine Kautschukzusammensetzung umfassend wenigstens eine Kautschukkomponente und wenigstens eine Füllstoffkomponente, wobei die Füllstoffkomponente Ligninpartikel nach einem oder mehreren der Ansprüche 10 bis 13 als Füllstoff enthält, wobei die Kautschukzusammensetzung vorzugsweise vulkanisierbar ist.

Fig. 1

**Fig. 2**

**Fig. 3**

**Fig. 4**

EP 4 230 699 A2

**Fig. 5**

36

**Fig. 6**

**Fig. 7**

**Fig. 8**

**Fig. 9**

Chemische Verschiebung [ppm]

Rohstoff ——— — — PS2 Wasserabtrennung 10 — — PS2 Wasserabtrennung 8
········· PS2 Wasserabtrennung 15 ———— PS2 Wasserabtrennung 20

**Fig. 10**

**Fig. 11**

**Fig. 12**

PS2 Wasserabtrennung 12

PS2 Wasserabtrennung 8

**Fig. 13 (1/2)**

Fig. 13 (2/2)

PS2 Wasserabtrennung 17

PS2 Wasserabtrennung 15

**Fig. 14**

PS2 Wasserabtrennung 19

PS2 Wasserabtrennung 20

**Fig. 15**

**Fig. 16**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130116383 A1
- DE 102013002574 A1
- WO 2015018944 A1
- WO 2017085278 A1

**In der Beschreibung aufgeführte Nicht-Patentliteratur**

- **SAMENI et al.** *BioResources,* 2017, vol. 12, 1548-1565
- **PODSCHUN et al.** *European Polymer Journal,* 2015, vol. 67, 1-11
- **KANG.** *Bioressource Technologie,* 2012, vol. 110, 715-718